(19) Europäisches Patentamt
European Patent Office
Office européen des brevets

(11) **EP 2 199 978 B1**

(12) **EUROPEAN PATENT SPECIFICATION**

(45) Date of publication and mention
of the grant of the patent:
**02.03.2016 Bulletin 2016/09**

(51) Int Cl.:
***G06T 7/00*** *(2006.01)*

(21) Application number: **09179218.4**

(22) Date of filing: **15.12.2009**

(54) **Image capturing apparatus having subject cut-out function**

Bilderfassungsvorrichtung mit Subjektausschneidefunktion

Appareil de capture d'images doté d'une fonction découpe de sujet

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **16.12.2008 JP 2008319633
07.01.2009 JP 2009001484
08.12.2009 JP 2009278378**

(43) Date of publication of application:
**23.06.2010 Bulletin 2010/25**

(73) Proprietor: **Casio Computer Co., Ltd.
Tokyo 151-8543 (JP)**

(72) Inventors:
• **Matsunaga, Kazuhisa
Hamura-shi
Tokyo (JP)**
• **Makino, Tetsuji
Hamura-shi
Tokyo (JP)**
• **Sasaki, Masaaki
Hamura-shi
Tokyo (JP)**

(74) Representative: **Grünecker Patent- und
Rechtsanwälte
PartG mbB
Leopoldstraße 4
80802 München (DE)**

(56) References cited:
**US-A1- 2005 265 453 US-A1- 2006 088 191
US-B2- 7 024 054**

**Description**

CROSS-REFERENCE TO THE RELATED APPLICATION(S)

The present application is based upon and claims priority from prior Japanese Patent Application No. 2008-319633, filed on December 16, 2008, from prior Japanese Application No. 2009-001484, filed on January 7, 2009, and from prior Japanese Application No. 2009-278378, filed on December 8, 2009.

TECHNICAL FIELD

The present invention relates to an image capturing apparatus, an image processing method, and a computer program for extracting a subject region from a captured image.

BACKGROUND

Conventionally, there is known an image capturing apparatus provided with an application program for extracting a subject image mainly including an image of a subject. The application program causes the image capturing apparatus to capture an image of the subject in a background, and then to capture a background image without the subject in the background by using the image capturing apparatus being unmoved. The application program then generates differential information from the captured image including the subject and the captured ackground image, and extracts the subject image from the captured image. An example of such image capturing apparatus is disclosed in JP-A-10-021408.

However, if the background image is taken with the image capturing apparatus held in a hand after taking the image including the subject, a movement in angle-of-view tends to occur during that process. This results in a disadvantage that differences occur between the pixel values of the background images while extracting a subject region, in which case a portion of the background is likely to be erroneously recognized as the subject image.

US 7,024,054 B2 describes an apparatus and a method for producing a foreground mask from a digital image, the apparatus and technique being based on receiving two digital images, wherein the first digital image is derived from a first original scene image including a foreground photographed against a background having arbitrary and unknown content matter, and the second digital image being derived from a second original scene image including substantially the same background but without the foreground. The second digital image is automatically aligned to the first digital image without user intervention to generate an aligned digital image including the background without the foreground. Then, using the first digital image and the aligned digital image, a foreground mask is produced relating to the spacial regions in the first digital image pertaining to the foreground. The foreground mask may be used to generate a composite digital image.

SUMMARY

An object of the present invention is to provide an image capturing apparatus, an image processing method, and a computer readable medium including a program capable of increasing the accuracy of extraction of a subject region.

According to a first aspect of the present invention, there is provided an image capturing apparatus including the features defined in claim 1.

According to a second aspect of the present invention, there is provided an image processing method as defined in claim 10.

According to a third aspect of the present invention, there is provided a computer readable medium storing a software program that causes a computer to perform image processing as defined in claim 11.

BRIEF DESCRIPTION OF THE DRAWINGS

A general configuration that implements the various features of the present invention will be described with reference to the drawings. The drawings and the associated descriptions are provided to illustrate embodiments of the invention and not to limit the scope of the invention.

Fig. 1 is a block diagram showing a general configuration of an image capturing apparatus according to an embodiment of the present invention.
Fig. 2 is a flowchart of an example subject cutting-out process of the image capturing apparatus of Fig. 1.
Fig. 3 is a flowchart that follows the flowchart of Fig. 2.
Figs. 4A and 4B show example image conversion models used in the subject cutting-out process of Figs. 2 and 3.
Fig. 5 is a flowchart of an example subject extracting process which is part of the subject cutting-out process of Figs.

2 and 3.

Fig. 6 is a flowchart of an example subject cut-out image generating process which is part of the subject cutting-out process of Figs. 2 and 3.

Figs. 7A-7C show schematic images for description of the subject cutting-out process of Figs. 2 and 3.

Figs. 8A-8C show other schematic images for description of the subject cutting-out process of Figs. 2 and 3.

Fig. 9 is a flowchart of an example subject combined image generating process of the image capturing apparatus of Fig. 1.

Fig. 10 is a flowchart of an example image combining process which is part of the subject combined image generating process of Fig. 9.

Fig. 11 is a flowchart of another example subject cutting-out process of the image capturing apparatus of Fig. 1.

Fig. 12 is a flowchart that follows the flowchart of Fig. 11.


DETAILED DESCRIPTION

The embodiments according to the present invention will be described in detail with reference to the accompanying drawings. The scope of the claimed invention should not be limited to the examples illustrated in the drawings and those described below.

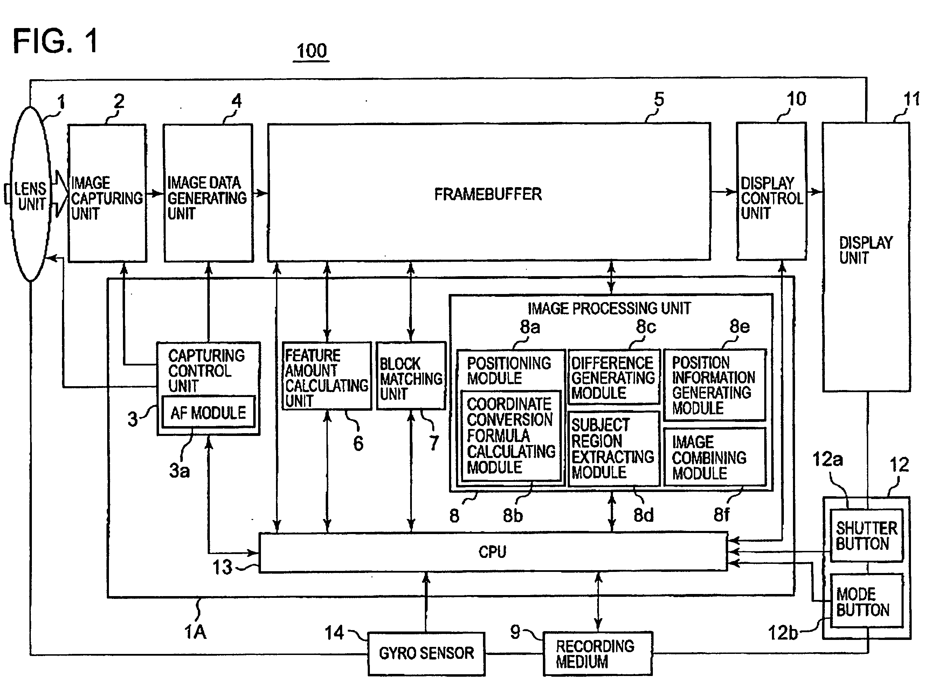

Fig. 1 is a block diagram showing a general configuration of an image capturing apparatus 100 according to an embodiment of the invention.

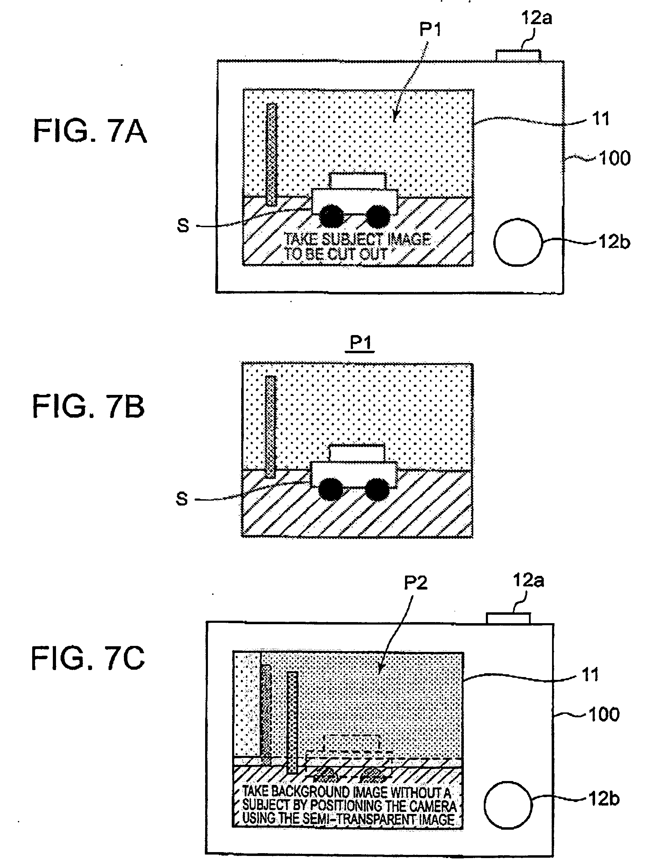

The image capturing apparatus 100 according to the embodiment captures (takes) a subject-including image P1 (see Fig. 7A) in which a subject image S is contained on a background under given capturing conditions that are suitable for a situation with a subject S. Then, the image capturing apparatus 100 captures a background image P2 (see Fig. 7C) including no subject image S under the same conditions as the subject-including image P1 is captured. After positioning of the subject-including image P1, differential information between each corresponding pair of pixels of the subject-including image P1 and the background image P2 is generated and a subject region including the subject image S is extracted from the subject-including image P1 based on the pieces of differential information.

A more specific description will be made below. As shown in Fig. 1, the image capturing apparatus 100 is provided with a lens unit 1, an image capturing unit 2, a capturing control unit 3, an image data generating unit 4, a framebuffer 5, a feature amount calculating unit 6, a block matching unit 7, an image processing unit 8, a recording medium 9, a display control unit 10, a display unit 11, a user interface 12, a gyro sensor 14, and a processor (CPU) 13.

The capturing control unit 3, the feature amount calculating unit 6, the block matching unit 7, the image processing unit 8, and the CPU 13 may be designed as a single custom LSI 1A.

The lens unit 1 is provided with a plurality of lenses such as a zoom lens and a focusing lens.

Although not shown in any drawing, the lens unit 1 may be equipped with, for example, a zoom actuator and a focus actuator for actuating the zoom lens and the focusing lens, respectively, in the optical-axis direction in capturing the subject image S of a subject.

The image capturing unit 2, which is an image sensor such as a CCD (charge-coupled device) or a CMOS (complementary metal-oxide-semiconductor) sensor, converts an optical image obtained after passage of light through the various lenses of the lens unit 1 into a two-dimensional image signal.

Although not shown in the drawings, the capturing control unit 3 is provided with a timing generator and a driver. The capturing control unit 3 causes the image capturing unit 2 to convert an optical image into a two-dimensional image signal every given cycle by scan-driving the image capturing unit 2 using the timing generator and the driver. The capturing control unit 3 thus causes an image frame to be read from the imaging area of the image capturing unit 2 (one image frame at a time) and output to the image data generating unit 4.

The capturing control unit 3 also performs controls for adjusting the subject capturing conditions. More specifically, the capturing control unit 3 is provided with an AF module 3a which performs an automatic focusing control for adjusting the focusing conditions by moving the lens unit 1 in the optical-axis direction.

Furthermore, the capturing control unit 3 performs, as other controls for adjusting the capturing conditions, an AE (automatic exposure) control and an AWB (automatic white balance) control.

Where a subject cutting-out mode (described later) is set as a shooting mode, in response to a first shooting operation on a shutter button 12a by the user, the capturing control unit 3 causes the image capturing unit 2 to convert an optical image (that has passed through the lens unit 1) for a subject-including image P1 (see Fig. 7A) in which a subject image S (e.g., automobile image) is located on a background to into a two-dimensional image signal under given conditions and causes an image frame of the subject-including image P1 to be read from the imaging area of the image capturing unit 2.

After the subject-including image P1 is taken, the capturing control unit 3 keeps a state that the capturing conditions are fixed to those of the subject-including image P1. Then, in response to a second shooting operation on the shutter button 12a by the user, the capturing control unit 3 causes the image capturing unit 2 to convert an optical image (that has passed through the lens unit 1) for a background image P2 (see Fig. 7C) having no subject image S on the same background as the background of the subject-including image P1 into a two-dimensional image signal under the above-mentioned fixed conditions and causes an image frame of the background image P2 to be read from the imaging area of the image capturing unit 2.

The imaging lens unit 1, the image capturing unit 2, and the capturing control unit 3 are configured to serve as a first image capturing unit for capturing a subject-including image P1 in which a subject image S is located on a background into a two-dimensional image signal under given conditions and as a second image capturing unit for capturing a background image P2 having no subject image S on the same background as the background of the subject-including image P1.

After performing appropriate gain adjustments on respective color components (R, G, and B) of an analog-value signal of the image frame transferred from the image capturing unit 2, the image data generating unit 4 subjects resulting signals to sample-and-hold by sample-hold circuits (not shown), conversion into digital data by A/D converters (not shown), and color processing including pixel interpolation and γ-correction by a color processing circuit (not shown). Then, the image data generating unit 4 generates a digital-value luminance signal Y and color-difference signals Cb and Cr (YUV data).

The luminance signal Y and the color-difference signals Cb and Cr which are output from the color processing circuit are DMA-transferred to the framebuffer 5 (used as a buffer memory) via a DMA controller (not shown).

A demosaicing module (not shown) for developing A/D-converted digital data may be incorporated in the custom LSI 1A.

The framebuffer 5, which is configured by a DRAM, for example, temporarily stores data to be processed by the feature amount calculating unit 6, the block matching unit 7, the image processing unit 8 and CPU 13.

The feature amount calculating unit 6 performs feature extraction processing for extracting feature points from the background image P2 using the background image P2 itself as a reference. More specifically, the feature amount calculating unit 6 selects a given number (or more) of featuristic blocks (feature points) based on YUV data of a background image P2 and extracts the contents of those blocks as templates (e.g., squares of 16 x 16 pixels).

The feature extraction processing is processing of selecting featuristic blocks that are suitable for tracking from a large number of candidate blocks. More specifically, this processing calculates a gradient covariance matrix of each candidate block, employs, as an evaluation value, a minimum eigenvalue of or a result of a Harris operator operation on the gradient covariance matrix, and selects candidate blocks having large evaluation values using an absolute threshold value or according to relative ranks. In this manner, the feature extraction processing excludes regions that are not suitable for tracking because they are flat or high in randomness and selects, as templates, regions that are suitable for tracking such as corners of objects or patterns.

The block matching unit 7 performs block matching processing for positioning between a background image (reference image) P2 and a subject-including image (target image) P1. More specifically, the block matching unit 7 determines what region of the subject-including image P1 each template that has been extracted by the feature extraction processing corresponds to, that is, searches the subject-including image P1 for a position (corresponding region) that gives a best match to the pixel values of each template. The block matching unit 7 determines, as a motion vector of each template, a most appropriate offset between the background image P2 and the subject-including image P1 that provides a best evaluation value (e.g., the sum of squares of differences (SSD) or the sum of absolute values of differences (SAD)) of the degree of pixel value difference.

The image processing unit 8 is provided with a positioning module 8a for performing positioning between a subject-including image P1 and a background image P2.

The positioning module 8a performs positioning between a subject-including image P1 and a background image P2 based on feature points extracted from the background image P2. That is, the positioning module 8a is provided with a coordinate conversion formula calculating module 8b for calculating a coordinate conversion formula for coordinate conversion, in relation to the background image P2, of the pixels of the subject-including image P1 based on the feature points extracted from the background image P2. The positioning module 8a positions the subject-including image P1 with respect to the background image P2 by coordinate-converting the subject-including image P1 according to the coordinate conversion formula calculated by the coordinate conversion formula calculating module 8b.

More specifically, the coordinate conversion formula calculating module 8b employs, as a motion vector of the entire image, a motion vector that is statistically determined to cover a given percentage (e.g., 50%) or more of the motion vectors of the templates selected by the block matching unit 7 by performing a majority-decision operation on the motion vectors, and calculates a projective transformation matrix for the subject-including image P1 using a feature point correspondence relating to the motion vector thus employed. Then, the positioning module 8a positions the subject-including image P1 with respect to the background image P2 by coordinate-converting the subject-including image P1 according to the calculated projective transformation matrix.

The coordinate conversion formula calculating module 8b is configured to serve as a coordinate conversion formula calculating unit for determining a coordinate conversion formula for the pixels of a subject-including image P1 based on feature points extracted from a background image P2. The positioning module 8a is configured to serve as a positioning unit for performing positioning between a subject-including image P1 and a background image.

The positioning method described above is an example of methods that are implemented in the image capturing apparatus 100. For example, the reliability of a motion vector of the entire image may be increased by performing processing of determining the effectiveness of a tracking result (feature point correspondence) of each template in calculating a motion vector of the entire image.

More specifically, the block matching unit 7 sets two sub-templates from each template extracted by the feature extraction processing by, for example, direct-sum-dividing it into a checkered pattern. The block matching unit 7 determines what regions of the subject-including image P1 the two sub-templates correspond to; that is, the block matching unit 7 evaluates the degree of pixel value difference for each offset while doing coordinate offsetting in the search region and determines an offset that is evaluated as a best-match offset. The block matching unit 7 calculates an evaluation value of the template by adding together the calculated evaluation values of the two sub-templates, and employs, as sub-motion vectors of the sub-templates and a motion vector of the template, optimum offsets of the two sub-templates and the template between the background image P2 and the subject-including image P1 that provide best evaluation values of the degree of difference.

Then, the positioning module 8a determines the degree of coincidence between the motion vector of the template and the motion vectors of the sub-templates that have been determined by the block matching unit 8a. The feature point correspondence is regarded as effective if they are determined close, and is rendered ineffective and hence eliminated if they are determined not close. In this manner, the reliability of a motion vector of the entire image is increased which is calculated statistically.

The image processing unit is provided with a difference generating module 8c for generating differential information of each corresponding pair of pixels of the subject-including image P1 and the background image P2.

The difference generating module 8c eliminates high-frequency components using a lowpass filter from each of YUV data of the subject-including image P1 that are generated by the positioning module 8a by coordinate-converting its pixels according to the projective transformation matrix and YUV data of the background image P2. Then, the difference generating module 8c generates a degree-of-difference map by calculating the degree D of difference between each corresponding pair of pixels of the two images P1 and P2 according to the following equation (1).

$$\texttt{Degree of difference D =}$$
$$(Y - Y')^2 + \{(U - U')^2 + (V - V')^2\} * k \qquad (1)$$

In the equation (1), Y, U, and V represent the YUV data of the background image P2, Y', U', and V' represent the YUV data of the coordinate-converted subject-including image P1, and k is a coefficient for changing the contribution ratio between the luminance signal Y and the color difference signals U and V.

The difference generating module 8c is configured to serve as a difference generating unit for generating differential information between each corresponding pair of pixels of a subject-including image P1 and a background image P2.

The image processing unit 8 is provided with a subject region extracting module 8d for extracting a subject region that includes a subject image S from the subject-including image P1 based on the generated pieces of differential information between the corresponding pairs of pixels of the subject-including image P1 and the background image P2.

The subject region extracting module 8d binarizes the degree-of-difference map using a given threshold value. Then, if the background image P2 has features of a given amount or more, the subject region extracting module 8d eliminates pixel sets that are smaller than a given value and thin-line pixel sets due to a camera shake by performing erosion processing for eliminating regions where fine noise or differences due to a camera shake exist. Then, the subject region extracting module 8d extracts a largest island pattern as a subject region by performing labeling processing for assigning the same number to pixel sets that constitute the same link component. Subsequently, the subject region extracting module 8d performs dilation processing to compensate for the above erosion, and then performs hole-filling processing by replacing, with the subject region, labeled pixel sets the ratios of the numbers of whose constituent pixels to the number of constituent pixels of the subject region are smaller than a given value by performing labeling processing only in the subject region.

On the other hand, if the features of the background image P2 are less than the given amount, it is considered that a subject region can be determined properly in the subject-including image P1. Therefore, the subject region extracting module 8d does not perform erosion processing, dilation processing, labeling processing, or other processing on the binarized degree-of-difference map.

The subject region extracting module 8d is configured to serve as a subject extracting unit for extracting a subject region including a subject image S from a subject-including image P1 based on pieces of differential information of corresponding pairs of pixels of the subj ect-including image P1 and a background image P2.

The image processing unit 8 is also provided with a position information generating module 8e for determining a position of the subject region extracted from the subject-including image P1 and generates an alpha map (position information) M indicating the position of the subject region in the subject-including image P1.

The alpha map M is a map of alpha values ($0 \leq \alpha \leq 1$) for the respective pixels included in the subject-including image P1. The alpha values are used as weighted values in a process for alpha-blending the image of the subject region with a given background.

The position information generating module 8e generates alpha values by applying a lowpass filter to a binarized degree-of-difference map in which the largest island is given a value "1" and the other portion is given a value "0" and thereby generating intermediate values in a boundary portion. In this case, in the subject region which is given an alpha value "1, " the transmittance of the subject-including image P1 for a given background is 0%. On the other hand, in the background portion which is given an alpha value "0," the transmittance of the subject-including image P1 is 100%. In the boundary portion where the alpha value satisfies $0 < \alpha < 1$, the subject-including image P1 and the background image are blended together.

The position information generating module 8e is configured to serve as a position information generating unit for determining a position of a subject region in a subject-including image P1 and generating position information.

The image processing unit 8 is further provided with an image combining module 8f for generating image data of a subject cut-out image P4 by combining a subject image S with a given single-color background image P3 based on the generated alpha map M in such a manner that those pixels of the subject-including image P1 which have the alpha value "1" do not transmit the corresponding pixels of the single-color background image P3 and its pixels having the alpha value "0" transmit the corresponding pixels of the single-color background image P3.

The image combining module 8f generates an image as obtained by cutting away the subject region from the single-color background image P3 using 1's complements ($1 - \alpha$) in the alpha map M and generates a subject cut-out image P4 by combining the above image with the subject image S that has been cut out from the subject-including image P1 using the alpha map M.

The image combining module 8f is configured to serve as a constitute combining unit for generating a subject cut-out image P4 by combining an image of a subject region with a given background based on position information.

The image combining module 8f generates a subject combined image (not shown) by combining the subject cut-out image P4 with a background-use image (not shown) based on the generated alpha map M. The image combining module 8f allows transmission of those pixels of the background-use image which have an alpha value "0" and overwrites the pixel values of its pixels having an alpha value "1" with the pixel values of the corresponding pixels of the subject cut-out image P4. As for each pixel of the background-use image whose alpha value satisfies $0 < \alpha < 1$, the image combining module 8f generates an image ((background-use image) x ($1 - \alpha$)) as obtained by cutting away the subject region from the background-use image using 1's complement ($1 - \alpha$), calculates a value that was blended with the single background color when the subject cut-out image P4 was generated by using 1' complement ($1 - \alpha$) in the alpha map M, subtracts that value from the subject cut-out image P4, and combines a resulting value with the subject region cut-away image ((background-use image) x ($1 - \alpha$)).

The display control unit 10 performs a control for reading out display image data that is temporarily stored in the framebuffer 5 and causing the display unit 11 to display the display image data.

The display control unit 10 is provided with a VRAM, a VRAM controller, a digital video encoder, etc. Under the control of the CPU 13, the digital video encoder regularly reads, from the VRAM (not shown), via the VRAM controller, a luminance signal Y and color-difference signals Cb and Cr that have been read from the framebuffer 5 and is stored in the VRAM, generates a video signal based on the data of those signals, and causes the display unit 11 to display the video signal.

The display unit 11 may be a liquid crystal display device, for example. The display unit 11 displays, for example, an image taken by the image capturing unit 2 on the display screen based on a video signal supplied from the display control unit 10. More specifically, the display unit 11 displays a live-view image based on plural image frames generated by capturing an image of the subject S with the image capturing unit 2 and the capturing control unit 3 or a recording-view image taken as a main captured image.

In taking a subject-including image P1 in a state that a subject cutting-out mode (described later) is set as a shooting mode, the display unit 11 displays a message (e.g., "Take a subject image to be cut out."; see Fig. 7A) as an instruction to take a subject-including image P1 while overlapping the message on the live-view image.

In taking a background image P2 in a state that the subject cutting-out mode is set as a shooting mode, the display unit 11 displays a message (e.g., "Take a background image without a subject by positioning the camera using the semi-transparent image. "; see Fig. 7C) as an instruction to take a background image P2, together with a subject-including image P1 in semi-transparent display form to be ovelapped on a live-view image.

The term "subject-including image in semi-transparent display form" means a subject-including image that is displayed in a transparency in a range between a transparent and an opaque, that is, a subject-including image that transmits the outlines, colors, light/shade, etc. of a live-view image displayed behind the subject-including image being overlapped.

Controlled by the display control unit 10, the display unit 11 displays a subject cut-out image P4 in which a subject image S is overlapped on a given single-color background image P3 based on image data of a subject cut-out image P4 generated by the image combining module 8f of the image processing unit 8.

The display unit 11 is configured to serve as a display unit for displaying a subject cut-out image P4 generated by the image combining module 8f.

The recording medium 9, which is a nonvolatile memory (flash memory), for example, stores recording image data of a captured image that has been encoded by a JPEG compressing module (not shown) of the image processing unit 8.

The recording medium 9, which serves as a storage unit, stores compressed versions of an alpha map M generated by the position information generating unit 8e of the image processing unit 8 and image data of a subject cut-out image P4 in such manner that they are correlated with each other and the image data of the subject cut-out image P4 is given an extension ".jpe" for example. The alpha map M, which is data having gradations of about 8 bits, for example, is higher in compression efficiency (because it has many regions each having the same value) and hence can be stored with a smaller capacity than the image data of the subject cut-out image P4.

The user interface 12 allows the user to perform an operation on the image capturing apparatus 100. More specifically, the user interface 12 is provided with the shutter button 12a through which to give a command to shoot a subject S, a mode button 12b through which to give an instruction relating to selection of a shooting mode, a function, or the like through a menu picture, a zoom button (not shown) through which to give an instruction relating to adjustment of the zoom amount, and other buttons. The user interface 12 outputs an operation signal to the CPU 13 in response to a manipulation on each of those buttons.

The gyro sensor 14 detects an angular velocity of the image capturing apparatus 100 and outputs resulting gyro data to the CPU 13. Based on the gyro data, the CPU 13 determines whether the image capturing apparatus 100 has been kept unmoved with its angle of view kept unchanged (i.e., kept in a stationary state) from an instant of taking of a subject-including image P1 to an instant of taking of a background image P2.

The gyro sensor 14 and the CPU 13 are configured to serve as a position determining unit for determining whether the position of the main body of the image capturing apparatus 100 has varied relatively between an instant of taking of a subject-including image P1 and an instant of taking of a background image P2.

The CPU 13 serves to control other components provided in the image capturing apparatus 100. The CPU 13 performs various control operations according to various processing programs (not shown) for the image capturing apparatus 100.

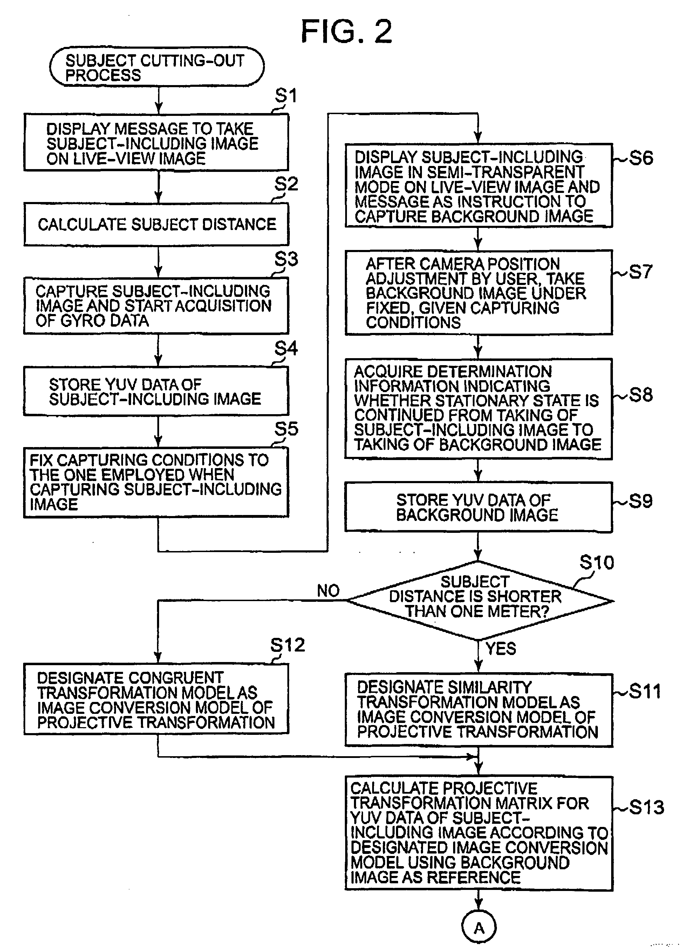

Next, a subject cutting-out process of an image processing method of the image capturing apparatus 100 will be described below with reference to Figs. 2-8C.

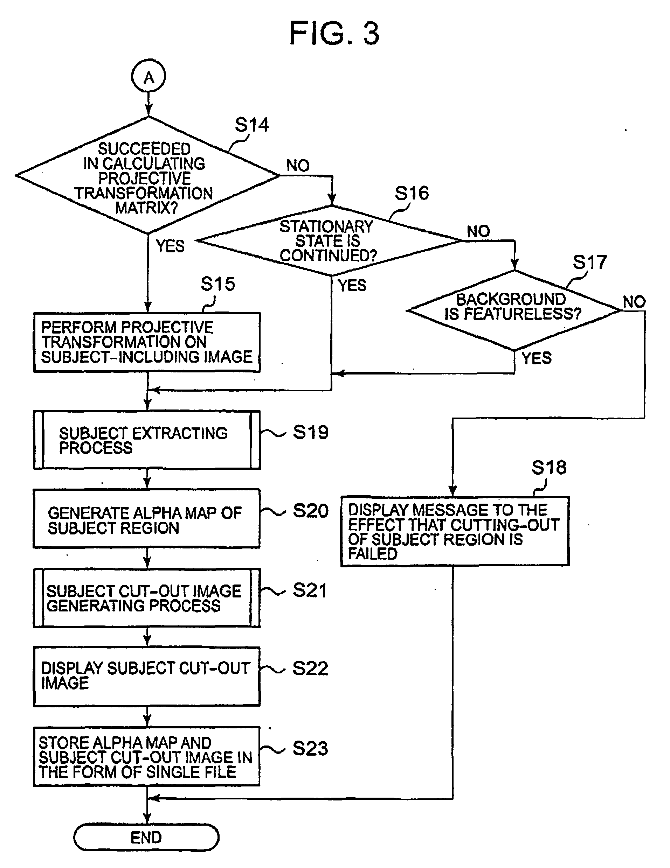

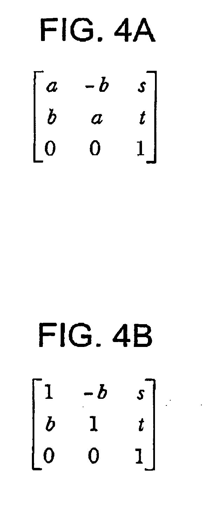

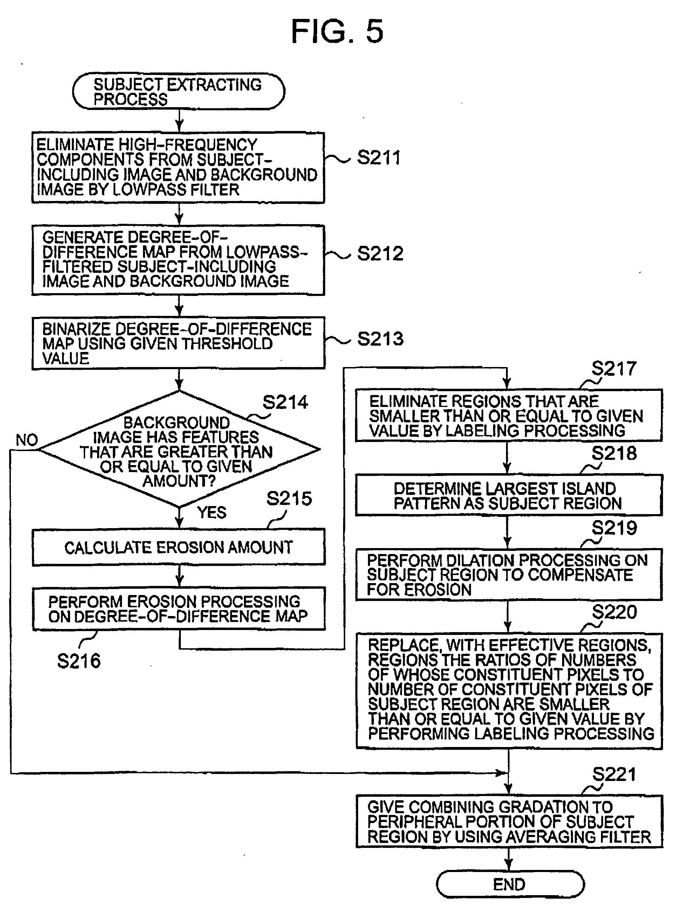

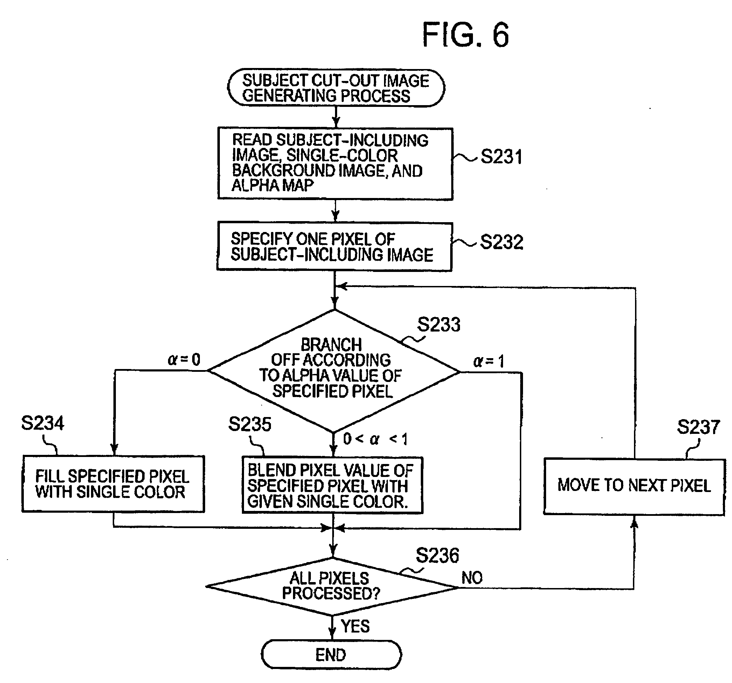

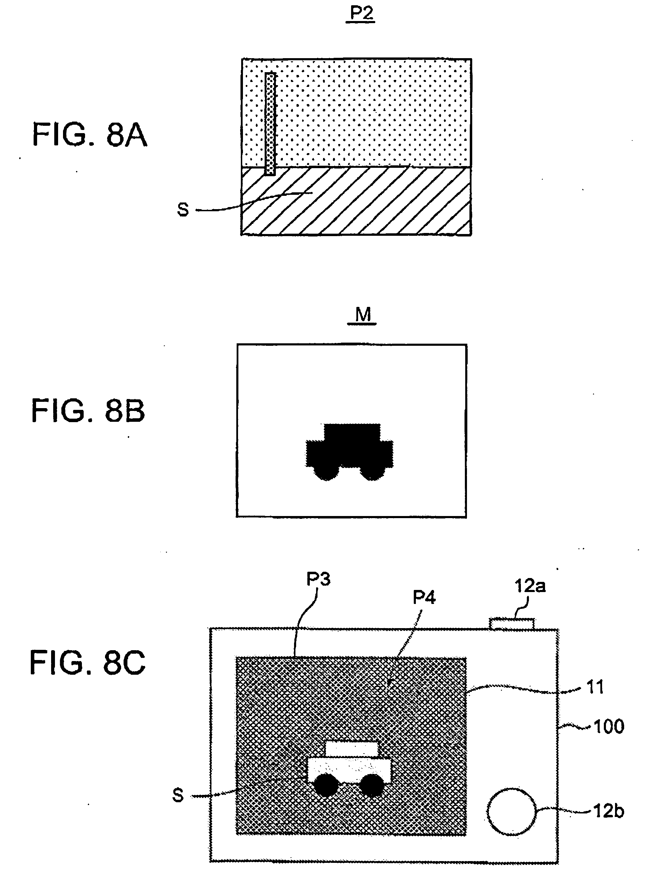

Figs. 2 and 3 are a flowchart of an example subject cutting-out process. Figs. 4A and 4B show example image conversion models of projective transformation; Fig. 4A shows an example similarity transformation model and Fig. 4B shows an example congruent transformation model. Fig. 5 is a flowchart of an example subject extracting process which is part of the subject cutting-out process. Fig. 6 is a flowchart of an example subject cut-out image generating process which is part of the subject cutting-out process. Figs. 7A-7C and 8A-8C show schematic images for description of the subject cutting-out process.

The subject cutting-out process is a process that is executed when a subject cutting-out mode is selected from plural shooting modes displayed in a menu picture in response to a given manipulation on the mode button 12b of the user interface 12 by the user.

As shown in Fig. 2, first, at step S1, the CPU 13 controls the display control unit 10 to display a live-view image on the display screen of the display unit 11 based on plural image frames generated by shooting a subject S with the lens unit 1, the electronic imaging section 2, and the capturing control unit 3 and displays a message (e.g., "Take a subject image to be cut out. "; see Fig. 7A) as an instruction to take a subject-including image P1 on the display screen of the display unit 11 to be overlappeed on the live-view image.

If the shutter button 12a of the user interface 12 is half-pressed by the user, at step S2 the CPU 13 controls the AF module 3a of the capturing control unit 3 to adjust the focusing position of the focusing lens and calculate a subject distance and acquires it. At this time, the CPU 13 may cause the capturing control unit 3 to adjust the capturing conditions such as the exposure conditions (shutter speed, aperture, amplification factor, etc.) and the white balance.

At step S3, the CPU 13 controls the electronic imaging section 2 to shoot an optical image to take a subject-including image P1 under given capturing conditions with timing that the user makes a shooting operation (full pressing) on the shutter button 12a of the user interface 12. Immediately before taking of a subject-including image P1, the CPU 13 calls an initialization function for a stationary state determination and starts acquisition of gyro data from the gyro sensor 14. More specifically, every time a frame sync signal is received, the CPU 13 calls a stationary state determination monitoring task and acquires gyro data that is output from the gyro sensor 14. In this manner, the CPU 13 continuously monitors whether the image capturing apparatus 100 is in a stationary state.

At step S4, the CPU 13 generates YUV data of the subject-including image P1 (see Fig. 7B) based on an image frame of the subject-including image P1 transferred from the image capturing unit 2 and stores the generated YUV data in the framebuffer 5 (temporary storage).

At step S5, the CPU 13 controls the capturing control unit 3 to maintain a state that the capturing conditions such as the focusing position, exposure conditions, and white balance that were employed when the subject-including image P1 was taken are fixed.

At step S6, the CPU 13 controls the display control unit 10 to display a live-view image on the display screen of the display unit 11 based on plural image frames generated by shooting the subject S with the lens unit 1, the electronic imaging section 2, and the capturing control unit 3 and displays a subject-including image P1 in semi-transparent display form and a message (e.g., "Take a background image without a subject image in such a manner that it is registered with the semi-transparent image."; see Fig. 7C) as an instruction to take a background image P2 on the display screen of the display unit 11 to be overlapped on the live-view image. Then, the user takes a background image P2 after letting the subject S move out of the angle of view or waiting for the subject S to move out.

At step S7, the CPU 13 controls the image capturing unit 2 to shoot an optical image of a background image P2 under the capturing conditions that have been fixed since the taking of the subject-including image P1 with timing that the camera position has been adjusted by the user so that the background image P2 is registered with the semi-transparent version of the subject-including image P1 and the shutter button 12a of the user interface 12 is shooting-manipulated by the user.

At step S8, the CPU 13 acquires, from the stationary state determination monitoring task, determination information indicating whether the stationary state of the image capturing apparatus 100 has continued from the instant of taking of the subject--including image P1 to the instant of taking of the background image P2.

At step S9, the CPU 13 controls the image data generating unit 4 to generate YUV data of the background image P2 (see Fig. 8A) based on an image frame of the background image P2 transferred from the image capturing unit 2 and stores the generated YUV data in the framebuffer 5 (temporary storage).

At step S10, the CPU 13 acquires a subject distance from the AF module 3a and determines whether the subject distance is shorter than one meter. That is, the CPU 13 determines, as the distance determining unit, whether the distance to the subject S is longer than or equal to the given value.

If determined that the subject distance is shorter than one meter (S10: yes), at step S11 the CPU 13 designates, as an image deformation model of projective transformation, a similarity transformation model (see Fig. 4A) of similarity transformation (deformation having degrees of freedom of enlargement/reduction, rotation, horizontal translation, and vertical translation (four parameters)). The reason why a similarity model is used for projective transformation if the subject distance is less than one meter is as follows. It is a typical case that when the user lets a subject go out of the angle of view after taking of a subject-including image P1 (first taking), the image capturing apparatus 100 is moved so much that it becomes difficult to restore the same position (particularly in the front-rear direction) even if a semi-transparent image is referred to.

On the other hand, if determined that the subject distance is not shorter than one meter (S10: no), at step S12 the CPU 13 designates, as an image deformation model of projective transformation, a congruent transformation model (see Fig. 4B) of congruent transformation (deformation having degrees of freedom of rotation (the rotation angle is assumed to be about zero degree to two degrees and $\cos\theta$ is approximated at one), horizontal translation, and vertical translation (three parameters)). The reasons why a congruent transformation model is used for projective transformation if the subject distance is not shorter than one meter are as follows. When the subject distance is long, a movement of the image capturing apparatus 100 in the front-rear direction has almost no influence on shooting. Avoiding use of an unnecessary degree of freedom makes it possible to eliminate influences of low-reliability motion vectors produced by noise or influence by a movement of the subject and thereby obtain a positioning transformation matrix that is higher in accuracy.

At step S13, the CPU 13 controls the feature amount calculating unit 6, the block matching unit 7, and the image processing unit 8 to calculate a projective transformation matrix for projective transformation of the YUV data of the subject-including image P1 according to the designated image conversion model using, as a reference, the YUV data of the background image P2 which is stored in the framebuffer 5.

More specifically, the feature amount calculating unit 6 selects a given number (or more) of featuristic blocks (feature points) based on the YUV data of the background image P2 and extracts the contents of those blocks as templates. The block matching unit 7 searches the subject-including image P1 for a position that gives a best match to the pixel values of each template extracted by the feature extraction processing and calculates, as a motion vector of the template, an optimum offset between the background image P2 and the subject-including image P1 that provides a best evaluation value of the degree of pixel value difference. The coordinate conversion formula calculating module 8b of the image processing unit 8 statistically calculates a motion vector of the entire image based on the motion vectors of the plural templates calculated by the block matching unit 7, and calculates a projective transformation matrix for the subject-including image P1 using a feature point correspondence of the calculated motion vector.

At step S14 (see Fig. 3), the CPU 13 controls the image processing unit 8 to determine whether the calculation of a projective transformation matrix has succeeded. That is, the processing section 8 determines whether step S13 succeeded in statistically calculating a motion vector of the entire image from motion vectors of plural templates and calculating a projective transformation matrix for the subject-including image P1 using a feature point correspondence of the calculated motion vector.

If determined that the calculation of a projective transformation matrix has succeeded (S14: yes), at step S15 the CPU 13 controls the positioning module 8a of the image processing unit 8 to perform positioning between the YUV data of the subject-including image P1 and that of the background image P2 by performing projective transformation on the subject-including image P1 according to the calculated projective transformation matrix.

On the other hand, if determined that the calculation of a projective transformation matrix has failed (S14: no), the CPU 13 determines at step S16 whether the stationary state of the image capturing apparatus 100 has continued from the instant of taking of the subject-including image P1 to the instant of taking of the background image P2 based on determination information acquired from the stationary state determination monitoring task.

If determined that the stationary state has continued from the instant of taking of the subject-including image P1 to the instant of taking of the background image P2 (S16: yes) because, for example, the subject-including image P1 and the background image P2 were taken in a state that the image capturing apparatus 100 is fixed to a tripod, the CPU 13 recognizes that almost no change has occurred in the background position and omits the projective transformation processing for positioning to be performed by the positioning module 8a of the image processing unit 8.

On the other hand, if determined that the stationary state has not continued (S16: no) because, for example, the subject-including image P1 and the background image P2 were taken with the image capturing apparatus 100 held by the user with a hand, at step S17 the CPU 13 controls the feature amount calculating unit 6 to determine whether the background is featureless or not based on the image data of the background image P2. More specifically, the feature amount calculating unit 6 determines the featurelessness of the background image P2 according to the ratio of a total area of blocks (in the entire background image P2) whose feature quantities are greater than or equal to a given value to the area of the entire background image P2. If the featurelessness is higher than or equal to a given value, the feature amount calculating unit 6 determines that the background is featureless. That is, the feature amount calculating unit 6 determines, as featurelessness determining unit, whether the featurelessness of the background image P2 is higher than or equal to the given value.

If determined that the background is featureless (S17: yes), the positioning module 8a of the image processing unit 8 does not perform projective transformation processing for positioning. For example, if the background is flat and has no pattern, positioning is difficult to perform but no disadvantage arises even if the processing of positioning between the subject-including image P1 and the background image P2 is omitted because positional deviations, if any, have only small influences on the extraction of a subject region. That is, where the background has patterns, positional deviations cause differences in the positional deviation positions and discrimination of a subject region is made difficult. In contrast, where the background has no pattern, even if positional deviations occur, featureless patterns are compared with each other in the background portion and no difference values appear.

On the other hand, if determined that the background is not featureless (S17: no), at step S18 the CPU 13 displays a given message indicating a failure in the cutting-out of a subject region (e.g., "The cutting-out of a subject region is failed.") on the display screen of the display unit 11. Then, the CPU 13 finishes the subject cutting-out process.

At step S19, the CPU 13 controls the image processing unit 8 to execute a subject extracting process for extracting a subject region that includes a subject image S from the subject-including image P1.

The subject extracting process will be described below in detail with reference to Fig. 5.

As shown in Fig. 5, at step S211, for the purpose of extracting a subject region, the difference generating module 8c of the image processing unit 8 applies a lowpass filter to each of the YUV data of the subject-including image P1 and that of the background image P2 to eliminate their high-frequency components. At step S212, the difference generating module 8c calculates a degree-of-difference map by calculating the degree D of difference for each corresponding pair of pixels of the lowpass-filtered subject-including image P1 and background image P2 according to the following equation (2).

$$\text{Degree of difference D} =$$
$$(Y - Y')^2 + \{(U - U')^2 + (V - V')^2\} * k \qquad (2)$$

At step S213, the subject region extracting module 8d of the image processing unit 8 binarizes the generated degree-of-difference map using a given threshold value. At step S214, the CPU 213 determines whether the background image P2 has features that are greater than or equal to a given amount based on the feature points extracted by the feature amount calculating unit 6.

If determined that the background image P2 has features that are greater than or equal to the given amount (S214: yes), at step S215 the subject region extracting module 8d calculates a erosion amount to be employed in erosion processing based on a given value or the projective transformation matrix for the subject-including image P1. Difference regions may be caused by not only original image noise but also a camera shake. In that event, the erosion amount is changed according to the camera shake. That is, the erosion amount is increased if the output of the gyro sensor 14 is large, and vice versa.

At step S216, the subject region extracting module 8d performs erosion processing according to the calculated erosion amount to eliminate regions where differences have been caused by fine noise or a camera shake from the degree-of-difference map.

In this manner, the degree-of-difference map can be eroded and dilated taking a camera shake amount into consideration, whereby regions where differences have been caused by a camera shake can be eliminated properly from the degree-of-difference map.

The subject region extracting module 8d eliminates regions that are smaller than or equal to a given value or regions other than a maximum region by performing labeling processing at step S217, and determines a largest island pattern as a subject region at step S218.

At step S219, the subject region extracting module 8d performs dilation processing to compensate for the erosion.

At step S220, the subject region extracting module 8d replaces, with effective regions, regions the ratios of the numbers of whose constituent pixels to the number of constituent pixels of the subject region are smaller than or equal to a given value by performing labeling processing only in the subject region by performing labeling processing only in the subject region.

At step S221, the subject region extracting module 8d applies an averaging filter to the subject region to thereby give combining gradation to a peripheral portion of the subject region. If determined that the background portion P2 does not have features that are greater than or equal to the given amount (S214: no), the subject region extracting module 8d executes step S221. Then, the subject extracting process is finished.

Returning to Fig. 3, at step S20, the CPU 13 controls the position information generating module 8e of the image processing unit 8 to generate an alpha map M indicating a position of the extracted subject region in the subject-including image P1 (see Fig. 8B).

At step S21, the CPU 13 controls the image processing unit 8 to execute a subject cut-out image generating process for generating a subject cut-out image P4 by combining a subject image S with a given single-color background image P3.

The subject cut-out image generating process will be described below in detail with reference to Fig. 6.

As shown in Fig. 6, at step S231, the image combining module 8f of the image processing unit 8 reads the subject-including image P1, a single-color background image P3, and the alpha map M and develops them in the framebuffer 5.

The image combining module 8f specifies one pixel (e.g., the top-left corner pixel) of the subject-including image P1 at step S232, and causes the process to branch off according to the alpha value of the specified pixel in the alpha map M at step S233. More specifically, if the alpha value of the specified pixel of the subject-including image P1 is "0" (S233: $\alpha = 0$), at step S234 the image combining module 8f gives that pixel the given single color, that is, allows transmission of the given single color. If the alpha value of the specified pixel satisfies $0 < \alpha < 1$ (S233: $0 < \alpha < 1$), at step S235 the image combining module 8f blends the pixel value of that pixel with the given single color. If the alpha value of the specified pixel is "1" (S233: $\alpha = 1$), the image combining module 8f does nothing, that is, does not allow transmission of the given single color.

At step S236, the image combining module 8f determines whether all pixels of the subject-including image P1 have been processed or not.

If determined that not all pixels have been processed (S236: no), at step S237 the image combining module 8f moves the subject pixel to the next pixel. Then, the process returns to step S233.

The above described loop is performed repeatedly until it is determined that all pixels have been processed (S236: yes), whereby the image combining module 8f generates image data of a subject cut-out image P4 which is a combined image of the subject image S and the given single-color background image P3. Then, the subject cut-out image generating process is finished.

Returning to Fig. 3, at step S22, the CPU 13 controls the display control unit 10 to display the subject cut-out image P4 in which the subject image S is overlapped on the given single-color background image P3 on the display screen of the display unit 11 based on the image data of the subject cut-out image P4 generated by the image combining module 8f (see Fig. 8C).

At step S23, the CPU 13 stores, in a given storage area of the storage medium 9, as a single file (extension: .jpe), the alpha map M generated by the position information generating unit 8e of the image processing unit 8 and the image data of the subject cut-out image P4 in such manner that they are correlated with each other. Then, the subject cutting-out process is finished.

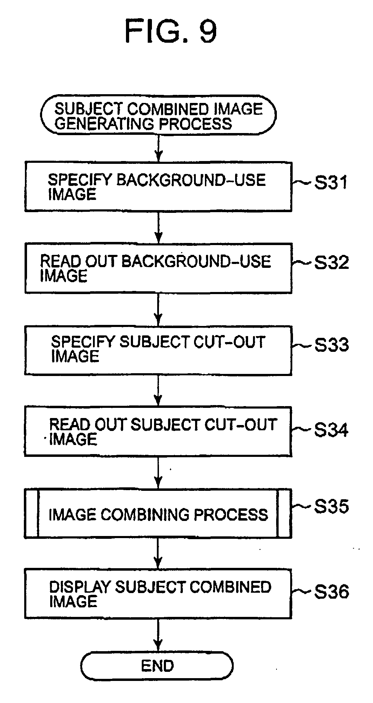

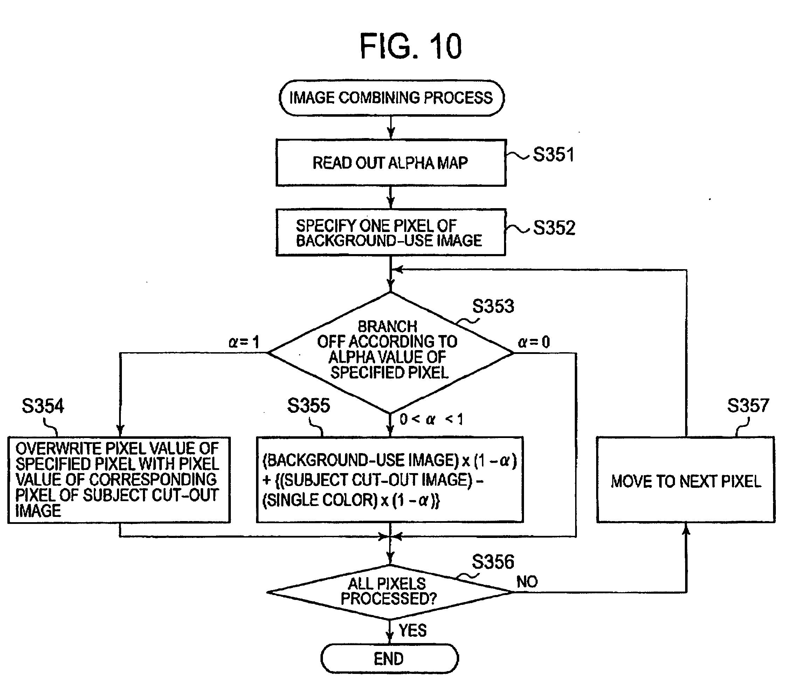

Next, a subject combined image generating process will be described in detail with reference to Figs. 9 and 10. Fig. 9 is a flowchart of an example subject combined image generating process. The subject combined image generating process is a process that the CPU 13 controls the image combining module 8f of the image processing unit 8 to generate a subject combined image by combining a background-use image (not shown) with a subject cut-out image.

As shown in Fig. 9, at step S31, a background-use image (not shown) to be used as a background is specified (selected) in response to a given manipulation on the user interface 12 by the user. At step S32, the image combining module 8f reads out the image data of the specified background-use image and develops it in the framebuffer 5.

At step S33, a subject cut-out image P4 which is stored so as to have an extension ".jpe" is specified (selected) in response to a given manipulation on the user interface 12 by the user. At step S34, the image combining module 8f reads out the image data of the specified subject cut-out image P4 and develops it in the framebuffer 5.

At step S35, the image combining module 8f executes an image combining process using the background-use image and the subject cut-out image P4 which are developed in the framebuffer 5.

The image combining process will be described below in detail with reference to Fig. 10. Fig. 10 is a flowchart of an example image combining process.

As shown in Fig. 10, at step S351, the image combining module 8f reads out an alpha map M which is stored so as to have an extension ".jpe" and develops it in the framebuffer 5.

The image combining module 8f specifies one pixel (e.g., the top-left corner pixel) of the background-use image at step S352, and causes the process to branch off according to the alpha value of the specified pixel in the alpha map M at step S353. More specifically, if the alpha value of the specified pixel of the background-use image is "1" (S353: $\alpha$ = 1), at step S354 the image combining module 8f overwrites the pixel value of that pixel with the pixel value of the corresponding pixel of the subject cut-out image P4, that is, allows transmission of the given single color. If the alpha value of the specified pixel satisfies $0 < \alpha < 1$ (S353: $0 < \alpha < 1$), at step S355 the image combining module 8f generates an image ((background-use image) x $(1 - \alpha)$) that is obtained by cutting away the subject region from the background-use image using 1' complement $(1 - \alpha)$, calculates a value that was blended with the single background color when the subject cut-out image P4 was generated by using 1's complement $(1 - \alpha)$ in the alpha map M, subtracts that value from the subject cut-out image P4, and combines a resulting value with the subject region cut-away image ((background-use image) x $(1 - \alpha)$). If the alpha value of the specified pixel is "0" (S353: $\alpha$ = 0), the image combining module 8f does nothing, that is, allows transmission of the background-use image.

At step S356, the image combining module 8f determines whether all pixels of the background-use image have been processed or not.

If determined that not all pixels have been processed (S356: no), at step S357 the image combining module 8f moves the subject pixel to the next pixel. Then, the process returns to step S353.

The above loop is executed repeatedly until it is determined that all pixels have been processed (S356: yes), whereby the image combining module 8f generates image data of a subject combined image which is a combined image of the subject cut-out image P4 and the background-use image. Then, the image combining process is finished.

Returning to Fig. 9, at step S36, the CPU 13 controls the display control unit 10 to display the subject combined image in which the subject image S is overlapped on the background-use image on the display screen of the display unit 11 based on the image data of the subject combined image generated by the image combining module 8f.

As described above, in the image capturing apparatus 100 according to the embodiment, first, a subject-including image P1 in which a subject image S is located on a background is taken under given capturing conditions that are suitable for a state that the subject S exists. Then, with the capturing conditions fixed to the given ones that were employed when the subject-including image P1 was taken, a background image P2 having no subject image S is taken. After positioning of the subject-including image P1, a degree-of difference map between corresponding pairs of pixels of the subject-including image P1 and the background image P2 is generated and a subject region including the subject image S is extracted from the subject-including image P1 based on the degree-of difference map.

Since a background image P2 is taken under the same, given capturing conditions as a subject-including image P1 was taken, the subject-including image P1 and the background image P2 can be made approximately identical in the brightness and hue of the background portion as well as in the degree of defocusing of the background portion and the ratio of its size to the size of the entire image, whereby the accuracy of extraction of a subject region from the subject-including image P1 can be increased. Since the fixed capturing conditions are set when a subject-including image P1 is taken, a cut-out subject image is made more appropriate than in the case where the capturing conditions are set for a background image P2.

When a background image P2 is taken, a subject-including image P1 is displayed on the display unit 11 in semi-transparent display form. Therefore, the user can more easily take a background image P2 which is the same as the background image of the subject-including image P1 by adjusting the camera position so that the background is registered with that of the semi-transparent version of the subject-including image P1.

Since positioning between the subject-including image P1 and the background image P2 is performed based on feature points that are extracted from the background image P2, an event that feature points are selected in a subject image S can be avoided.

That is, it is possible to calculate a projective transformation matrix for the pixels of the subject-including image P1 based on feature points extracted from the background image P2 and generate a degree-of-difference map between corresponding pairs of pixels of the background image P2 and the subject-including image P1 whose pixels have been subjected to projective transformation according to the calculated projective transformation matrix. Since feature points are extracted from the background image P2, an event that feature points are selected in a subject image S can be avoided and an event that coordinate conversion is performed based on apparently different image portions of the two images can also be avoided. Since highly accurate coordinate conversion can be performed, the pixels of the subject-including image P1 can properly be correlated with those of the background image P2, whereby a subject region can be extracted more properly.

Since a subject region is determined and extracted from a subject-including image P1 by eliminating pixel sets that are smaller than a given value by performing binarization processing, erosion/dilation processing, and labeling processing on a degree-of-difference map, a largest island pattern in the degree-of-difference map can be determined as a subject region. A subject region can thus be extracted more properly.

Whether to perform erosion/dilation processing and labeling processing on a binarized degree-of-difference map is determined depending on whether a background image P2 has features that are greater than or equal to a given amount. Therefore, erosion/dilation processing etc. are not performed if the background image P2 does not have features that are greater than or equal to the given amount, because in that case a subject image S should be determined properly in the subject-including image P1. The processing speed of the subj ect extracting process can thus be increased.

Since in the subject cutting-out process an alpha map M is generated by determining a position of an extracted subject region in the subject-including image P1, a position of the extracted subject region in the subject-including image P1 can thereafter be determined properly using the alpha map M.

Since a subject cut-out image P4 which is a combined image of a given single-color background image P3 and the image of the subject region is generated based on the alpha map M and displayed on the display screen of the display unit 11, the user can check a cut-out subject image S and hence can recognize whether or not the subject image S has been cut out properly. Since only the subject image S is cut out from the subject-including image P1 and the subject cut-out image P4 is composed using, as a background, the single-color background image P3 which is entirely different from the actual background, the user can enjoy a change from photographs already taken and stored. Displaying the composed subject cut-out image P4 on the display screen of the display unit 11 allows the user to recognize whether or not the cutting-out of the subject image S has been performed properly.

Since the subject cut-out image P4 is generated in such a manner that a boundary portion between the background region and the subject region is blended with the single color of the single-color background image P3, the cut-out subject image S can be made a natural image in which its boundary portion is blended with the single color properly.

Since the subject cut-out image P4 and the alpha map M are correlated with each other and stored as one file, it is not necessary to determine a subject region every time cutting-out/composing is performed using a background image that is entirely different from the single-color background image P3 that was used for the composing. This makes it possible to shorten the processing time.

If the subject-including image P1 in which the subject image S is located on the background and the background image P2 having no subject image S on the background were stored separately in the recording medium 9, a disadvantage would arise in combining the subject cut-out image P4 with one of images already taken and stored. That is, a subject image S needs to be cut out every time such combining is performed and hence the cutting-out processing takes time. There would be another disadvantage that the quality of a cut-out subject image S is not known in advance.

In contrast, in the embodiment, since the subject cut-out image P4 and the alpha map M are correlated with each other and stored as one file, it is not necessary to determine a subject region every time cutting-out/composing is performed using a given background image as a background and hence the processing time can be shortened. Furthermore, since the subject cut-out image P4 is stored as a file that is different from the file of the subject-including image P1 from which the subject region was extracted, the quality of the cut-out subject image S can be checked by displaying, before composing, the subject cut-out image P4 or the subject-including image P1 on the display screen of the display unit 11. This increases the convenience of the subject cutting-out/composing.

The invention is not limited to the above embodiment and various improvements and design modifications may be made without departing from the spirit and scope of the invention.

For example, although in subject cutting-out process (see Figs. 2 and 3) of the embodiment the determination as to a subject distance (step S10), the determination as to continuation of a stationary state (step S16), and the determination as to whether the background is featureless (step S17) are performed in this order, the order of execution of these determination steps is not limited to it.

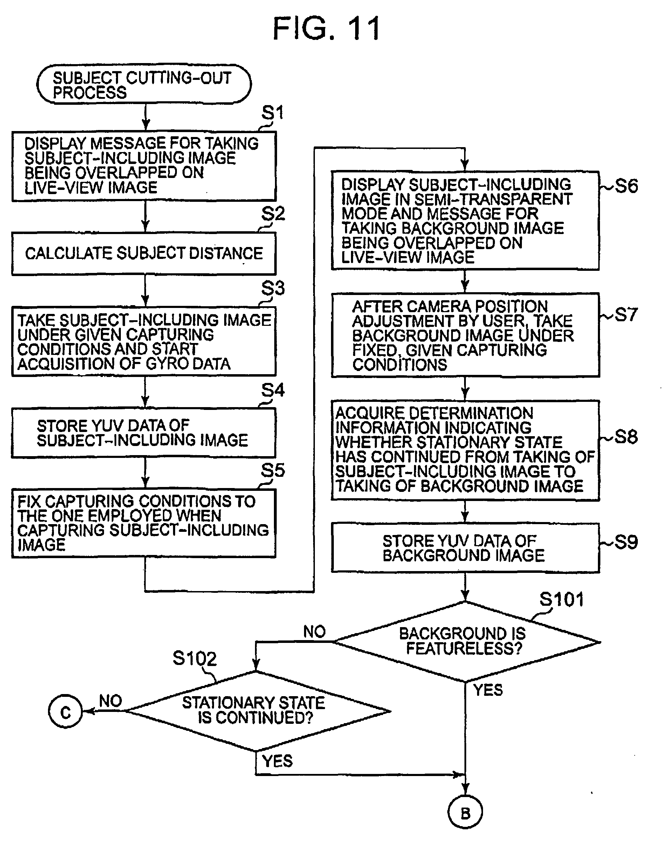

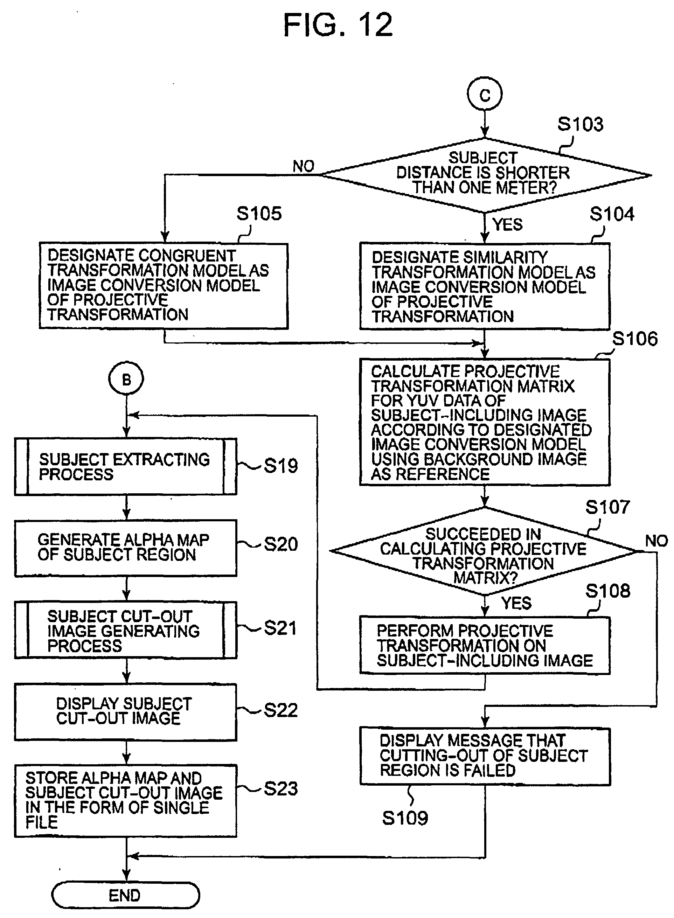

That is, as shown in Figs. 11 and 12, the order of execution may be such that determination as to continuation of a stationary state (step S102) is performed after determination as to whether the background is featureless (step S101) and determination as to a subject distance (step S103) is performed last.

More specifically, as shown in Fig. 11, after the YUV data of the background image P2 (see Fig. 8A) has been stored in the framebuffer 5 (temporary storage) at step S9, at step S101 the CPU 13 controls the feature amount calculating unit 6 to determine whether the background is featureless or not based on the image data of the background image P2.

If determined that the background is featureless (S101: yes), the CPU 13 omits projective transformation processing for positioning to be performed by the positioning module 8a of the image processing unit 8 and causes the image processing unit 8 to execute the subject extracting process (step S19 in Fig. 12) for extracting a subject region that includes a subject image S from the subject-including image P1.

On the other hand, if determined that the background is not featureless (S101: no), at step S102 the CPU 13 determines whether the stationary state has continued from the instant of taking of the subject-including image P1 to the instant of taking of the background image P2 based on determination information acquired from the stationary state determination monitoring task.

If determined that the stationary state has continued (S102: yes), the CPU 13 omits projective transformation processing for positioning to be performed by the positioning module 8a of the image processing unit 8 and causes the process to proceed to step S19.

On the other hand, if determined that the stationary state has not continued (S102: no), at step S103 (see Fig. 12) the CPU 13 acquires a subject distance from the AF module 3a and determines whether the subject distance is shorter than one meter.

If determined that the subject distance is shorter than one meter (S103: yes), at step S104 the CPU 13 designates a similarity transformation model (see Fig. 4A) as an image conversion model of projective transformation. On the other hand, if determined that the subject distance is not shorter than one meter (S103: no), at step S105 the CPU 13 designates a congruent transformation model (see Fig. 4B) as an image conversion model of projective transformation.

At step S106, the CPU 13 controls the block matching unit 7 and the image processing unit 8 to calculate a projective transformation matrix for projective transformation of the YUV data of the subject-including image P1 using, as a reference, the YUV data of the background image P2 which is stored in the framebuffer 5.

At step S107, the CPU 13 controls the image processing unit 8 to determine whether the calculation of a projective transformation matrix has succeeded. If determined that the calculation of a projective transformation matrix has succeeded (S107: yes), at step S108 the CPU 13 controls the positioning module 8a of the image processing unit 8 to perform processing for positioning between the YUV data of the subject-including image P1 and that of the background image P2 by performing projective transformation on the subject-including image P1 according to the calculated projective transformation matrix.

Then, the CPU 13 controls the process to proceed to step S19.

On the other hand, if determined that the calculation of a projective transformation matrix has failed (S107: no), at step S109 the CPU 13 displays a given message indicating a failure in the cutting-out of a subject region (e.g., "The cutting-out of a subject region has failed.") on the display screen of the display unit 11. Then, the CPU 13 finishes the subject cutting-out process.

Since the determination as to whether the background is featureless is made first, it is not necessary to perform projective transformation on the subject-including image P1 if determined that the background is featureless. As a result, the subject cutting-out process can be performed faster.

The determination as to continuation of a stationary state of the image capturing apparatus 100 may be made before the determination as to whether the background is featureless. As in the above case, it is not necessary to perform projective transformation on the subject-including image P1 if determined that the stationary state has continued. The subject cutting-out process can be performed faster.

Although in the above embodiment the determination as to whether the image capturing apparatus 100 is in a stationary state is made based on gyro data that is output from the gyro sensor 14, the invention is not limited to such a case. For example, this determination may be made based on whether a tripod is fixed to a tripod fixing potion (not shown) of the image capturing apparatus 100. More specifically, a determination "the stationary state of the image capturing apparatus 100 has continued" is made if a tripod was fixed to the tripod fixing potion when the subject-including image P1 and the background image P2 were taken. And a determination "the stationary state of the image capturing apparatus 100 has not continued" is made if a tripod was not fixed to the tripod fixing potion.

The above-described featurelessness may be calculated by measuring variation, such as dispersion or standard deviation, of each color components of the pixels in each blocks. The featurelessness may also be calculated from a sum of absolute values or square vales of differences in the color components of the pixels that are adjacent to one another.

The featurelessness may be defined as grayscale data having no color components. Also in this case, the grayscale featurelessness may be calculated by measuring variation, such as dispersion or standard deviation, of each color components of the pixels in each blocks or may be calculated from a sum of absolute values or square values of differences in the color components of the pixels that are adjacent to one another.

When an amount of noise included in the image is predictable or definable, adverse effect by the noise may be eliminated by ignoring a value lower than the noise in calculating the featurelessness.

Although in the above embodiment a still image of a subject S (automobile) is taken by two times of still image taking, the invention is not limited to such a case. For example, subject-including images P1 may be taken by consecutive shooting. In this case, a subject who moves fast such as a person who makes a golf swing is shot consecutively and then a background image P2 is taken after the person goes out of the angle of view. The process may be modified in such a manner that a subject region is extracted for each of the subject-including images P1 taken consecutively (step S19) and an alpha map M is generated for each subject region (step S20). Consecutively taken images are combined with a given single-color background image sequentially in order of taking and a motion JPEG image is generated to sequentially display images of the person who made a golf swing that have been cut out from the consecutively taken images. Alternatively, an image like what is called a strobe shot may be composed by superimposing images of the person who made a golf swing that have been cut out from the consecutively taken images, on each other to form a single image.

Although in the embodiment an alpha map M and image data of a subject cut-out image P4 are correlated with each other and stored as one file, the alpha map M and image data of a subject-including image P1 may be correlated with each other and stored as one file in the recording medium (storage unit) 9. In this case, two modes may be provided for reproduction of this file, that is, a mode in which the subject-including image P1 is reproduced and a mode in which a subject cut-out image P4 is composed at the time of reproduction by using the alpha map M.

A face detecting module may be provided in the image capturing apparatus 100 and the process may be modified in the following manner. Face detection is performed for each of a subject-including image P1 and a background image P2. If a face is detected only in the subject-including image P1, an offset value may be added so that the degree of difference (the degree of non-coincidence) of a degree-of-difference map is made high in a face-detected region. With this measure, an image of the face which is the most important part of a subject is included in a cut-out region more reliably. Furthermore, a face cutting-out mode may be provided and the process may be modified in such a manner that only a face-detected region is cut out by labeling and the conventional labeling process is omitted. This makes it possible to obtain a face cut-out image by lighter processing.

Although in the above embodiment the erosion processing (step S216) and the dilation processing (step S219) are performed after the binarization processing (step S213) on a degree-of-difference map, the invention is not limited to such a case. The binarization processing may be performed after the erosion processing and the dilation processing.

That is, the subject extracting process of the above embodiment is just an example and the subject extracting process may be modified arbitrarily as appropriate as long as a subject image S can be extracted properly from a subject-including image P1.

Although in the above embodiment the display unit 11 is employed as an example of output unit, the invention is not limited to such a case. For example, the output unit may be an external output terminal (not shown) to which a printer or the like can be connected. In this case, image data of a combined image is output to the printer via the external output terminal to print the combined image.

The configuration of the image capturing apparatus 100 described in the above embodiment is just an example and the invention is not limited to it.

For example, where the image capturing unit 2 is a CMOS image sensor, focal plane distortion may occur when a fast-moving subject is shot because the individual pixels are different from each other in the start timing of charge storage. To prevent this phenomenon, a mechanical shutter (not shown) which is drive-controlled by a shutter control section (not shown) may be provided to control the exposure time.

In addition, in the above embodiment, the functions of the first image capturing unit and the second image capturing unit are realized in such a manner the lens unit 1, the image capturing unit 2, and the capturing control unit 3 operate under the control of the CPU 13 and the functions of the positioning unit, difference generating unit, subject extracting unit, coordinate conversion formula calculating unit, position information generating unit, and combining unit are realized in such a manner the image processing unit 8 operates under the control of the CPU 13. However, the invention is not limited to such a case. They may be realized in such a manner that a given program or the like is run by the CPU 13.

More specifically, a program including a first shooting control routine, a second shooting control routine, a positioning routine, a difference generating routine, a subject extracting routine, a coordinate conversion formula calculating routine, a position information generating routine, and a combining routine may be stored in advance in a program memory (not shown) for storing a program. The first shooting control routine causes the CPU 13 to function as the first shooting control unit for causing the image capturing unit to take a subject-including image P1 in which a subject image S is located on a background. The second shooting control routine causes the CPU 13 to function as the second shooting control unit for causing the image capturing unit to take a background image P2 having no subject image S on the same background as the subject-including image P1 was taken. The positioning routine causes the CPU 13 to function as the positioning unit for performing positioning between the subject-including image P1 and the background image P2. The difference generating routine causes the CPU 13 to function as the difference generating unit for generating differential information between each corresponding pair of pixels of the subject-including image P1 and the background image P2. The subject extracting routine causes the CPU 13 to function as the subject extracting unit for extracting a subject region including the subject image S from the subject-including image P1 based on the generated pieces of differential information. The coordinate conversion formula calculating routine causes the CPU 13 to function as the coordinate conversion formula calculating unit for calculating a coordinate conversion formula for the pixels of the subject-including image P1 based on feature points extracted from the background image P2. The position information generating routine causes the CPU 13 to function as the position information generating unit for generating position information by determining a position of the extracted subject region in the subject-including image P1. The combining routine causes the CPU 13 to function as the combining unit for generating a subject cut-out image P4 which is a combined image of an image of the subject region and a given background, based on the generated position information.

It is to be understood that the present invention is not limited to the specific embodiments described above and that the invention can be embodied with the components modified without departing from the scope of the invention. The invention can be embodied in various forms according to appropriate combinations of the components disclosed in the embodiments described above. For example, some components may be deleted from all of the components shown in each embodiment. Further, components in different embodiments may be used appropriately in combination.

**Claims**

1.    An image capturing apparatus (100) comprising:

a first image capturing unit (1, 2, 3) configured to capture a subject-including image (P1) including a subject image being an image of a subject and an image of a background under a first capturing condition;
a second image capturing unit (1, 2, 3) configured to, after capturing the subject-including image (P1), capture a background image (P2) including the image of the background with no image of the subject under a second capturing condition that is substantially the same with the first capturing condition;
a feature amount calculating unit (6) configured to select a given number of featuristic blocks based on YUV data of the background image (P2) and extract contents of these blocks as templates, and further exclude regions of the image that are unsuitable for tracking because they are flat or high in randomness;
a featurelessness determining unit (6) configured to determine a featurelessness of the background image (P2) according to a ratio of total area of blocks in the entire background image (P2) whose feature quantities are greater than or equal to a threshold to the area of the entire background image (P2),
a block matching unit (7) for performing block matching processing for positioning between the background image (P2) and the subject-including image (P1) configured to search the subject-including image (P1) for a position that gives a best match and to determine, as a motion vector of each template, a most appropriate offset between the background image (P2) and the subject-including image (P1);
a coordinate conversion formula calculating module (8b) configured to calculate a projective transformation matrix for the subject-including image (P1) using a feature point correspondence relating to the motion vector;
a positioning unit (8a) configured to perform positioning of the subject-including image (P1) with respect to the background image (P2) by coordinate-converting the subject-including image (P1) according to the calculated projective transformation matrix;
a difference generating unit (8c) configured to generate differential information indicating difference between each corresponding pair of pixels in the subject-including image (P1) and in the background image (P2) as positioned by the positioning unit;
a subject extracting unit (8d) configured to extract a subject region including the subject image from the subject-including image based on the differential information generated by the difference generating unit; and
wherein the positioning unit (8a) is configured to omit performing the positioning of the subject-including image (P1) and the background image (P2) when the featurelessness is higher than the threshold,
the apparatus further comprising a distance determining unit (13) configured to determine a distance to the subject from the first image capturing unit (1, 2, 3), and a position determining unit (13, 14) configured to determine a change in a relative position between a first position of the apparatus (100) at which the subject-including image (P1) is captured and a second position of the apparatus at which the background image (P2) is captured,
wherein the positioning unit (8a) is configured to perform the positioning of the subject-including image (P1) and the background image (P2) in a simplified mode when the distance determined by the distance determining unit is greater than a second threshold, and

wherein the positioning unit (8a) is configured to omit performing calculation of the projective transformation matrix for the positioning of the subject-including image (P1) and the background image (P2) when the position determining unit determines that the relative position is unchanged.

2. The apparatus of Claim 1, wherein the subject extracting unit (8d) is configured to determine the subject region when extracting the subject region from the subject-including image by eliminating pixel sets having regions being smaller than a threshold based on the differential information generated by the difference generating unit (8c), and wherein the subject extracting unit is configured to determine whether or not to perform eliminating the pixel sets having regions being smaller than the threshold in accordance with a feature amount of the background image (P2) when extracting the subject region from the subject-including image.

3. The apparatus of Claim 1, wherein the subject extracting unit (8d) is configured to determine the subject region when extracting the subject region from the subject-including image (P1) by eliminating pixel sets having regions being smaller than a third threshold based on the differential information generated by the difference generating unit (8c), and
wherein the subject extracting unit is configured to eliminate the pixel sets having regions being smaller than the third threshold by performing erosion and dilation in accordance with an amount of a camera shake when extracting the subject region from the subject-including image (P1).

4. The apparatus of Claim 1 further comprising:

   a position information generating unit (8e) configured to generate position information indicating a position of the subject region in the subject-including image (P1).

5. The apparatus of Claim 1 further comprising:

   a combining unit (8f) configured to generate a combined image (P4) of an alternative background image and an image of the subject region based on subject region information of the subject region extracted by the subject extracting unit (8d).

6. The apparatus of Claims 4 and 5,
wherein the combining unit (8f) is configured to generate the combined image (P4) based on the position information generated by the position information generating unit (8e).

7. The apparatus of Claim 6, wherein the combining unit (8f) is configured to generate, as the combined image (P4), a subject cut-out image including the image of the subject region on a single-colored background (P3).

8. The apparatus of Claim 7, wherein the combining unit (8f) is configured to generate, as the combined image, a subject combined image being combined with the subject cut-out image (P4) and a given background image.

9. The apparatus of Claim 1 further comprising:

   a display unit (11) configured to display the subject-including image (P1) being overlapped in a semi-transparent mode on a live-view image of the background image (P2) being captured by the second image capturing unit (1, 2, 3).

10. An image processing method comprising:

    capturing a subject-including image (P1) including a subject image being an image of a subject and an image of a background under a first capturing condition;
    capturing a background image (P2) including the image of the background with no image of the subject under a second capturing condition that is substantially the same with the first capturing condition, after capturing the subject-including image (P1);
    performing feature extraction processing by selecting a given number of featuristic blocks based on YUV data of the background image (P2) and extracting contents of these blocks as templates, and further excluding regions of the image that are unsuitable for tracking because they are flat or high in randomness;
    determining a featurelessness of the background image (P2) according to a ratio of total area of blocks in the entire background image (P2) whose feature quantities are greater than or equal to a threshold to the area of the entire background image (P2);

performing block matching for positioning between the background image (P2) and the subject-including image (P1) by searching the subject-including image (P1) for a position that gives a best match and by determining, as a motion vector of each template, a most appropriate offset between the background image (P2) and the subject-including image (P1);

performing coordinate conversion by calculating a projective transformation matrix for the subject-including image (P1) using a feature point correspondence relating to the motion vector;

performing positioning of the subject-including image (P1) with respect to the background image (P2) by coordinate-converting the subject-including image (P1) according to the calculated projective transformation matrix;

generating differential information indicating difference between each corresponding pair of pixels in the subject-including image (P1) and in the background image (P2) as being positioned;

extracting a subject region including the subject image from the subject-including image based on the differential information; and

wherein performing the positioning of the subject-including image (P1) and the background image is omitted when the featurelessness is higher than the threshold,

the method further comprising: determining a distance to the subject from the image capturing unit capturing the subject-including image (P1), and

determining a change in a relative position between a first position of the apparatus (100) at which the subject-including image (P1) is captured and a second position of the apparatus at which the background image (P2) is captured,

wherein the positioning of the subject-including image (P1) and the background image (P2) is performed in a simplified mode when the determined distance is greater than a second threshold, and

performing calculation of the projective transformation matrix for the positioning of the subject-including image (P1) and the background image (P2) is omitted when the position determining unit determines that the relative position is unchanged.

11. A computer readable medium storing a software program that causes a computer to perform the image processing method according to claim 10.

**Patentansprüche**

1. Bildaufnahmevorrichtung (100), die umfasst:

eine erste Bildaufnahmeeinheit (1, 2, 3), die so eingerichtet ist, dass sie ein ein Objekt ent-haltendes Bild (P1), das ein Objekt-Bild, das ein Bild eines Objektes ist, und ein Bild eines Hintergrundes enthält, unter einer ersten Aufnahmebedingung aufnimmt;

eine zweite Bildaufnahmeeinheit (1, 2, 3), die so eingerichtet ist, dass sie nach Aufnehmen des ein Objekt enthaltenden Bildes (P1) ein Hintergrund-Bild (P2), das das Bild des Hinter-grundes ohne Bild des Objektes enthält, unter einer zweiten Aufnahmebedingung aufnimmt, die im Wesentlichen die gleiche ist wie die erste Aufnahmebedingung;

eine Einheit (6) zum Berechnen einer Menge von Merkmalen, die so eingerichtet ist, dass sie eine bestimmte Anzahl von Merkmal-Blöcken auf Basis von YUV-Daten des Hintergrund-Bildes (P2) auswählt und Inhalte dieser Blöcke als Schablonen (templates) extrahiert und des Weiteren Bereiche des Bildes ausschließt, die für Tracking nicht geeignet sind, da sie flach sind oder stark ungeordnet sind;

eine Einheit (6) zum Bestimmen von Merkmalslosigkeit, die so eingerichtet ist, dass sie eine Merkmalslosigkeit des Hintergrund-Bildes (P2) entsprechend einem Verhältnis einer Gesamtfläche von Blöcken in dem gesamten Hintergrund-Bild (P2), deren Mengen von Merkmalen größer sind als oder genauso groß wie ein Schwellenwert, zu der Fläche des gesamten Hintergrund-Bildes (P2) bestimmt,

eine Blockabgleicheinheit (7) zum Durchführen von Blockabgleich-Verarbeitung zum Positionieren zwischen dem Hintergrund-Bild (P2) und dem ein Objekt enthaltenden Bild (P1), die so eingerichtet ist, dass sie das ein Objekt enthaltende Bild (P1) auf eine Position durchsucht, die eine beste Übereinstimmung ergibt, und als einen Bewegungsvektor jeder Schablone einen am besten passenden Versatz zwischen dem Hintergrund-Bild (P2) und dem ein Objekt enthaltenden Bild (P1) bestimmt;

ein Modul (8b) zum Berechnen einer Koordinatenumwandlungs-Formel, das so eingerichtet ist, dass es eine projektive Transformations-Matrix für das ein Objekt enthaltende Bild (P1) unter Verwendung einer Merkmalpunkt-Entsprechung bezüglich des Bewegungsvektors berechnet;

eine Positioniereinheit (8a), die so eingerichtet ist, dass sie Positionieren des ein Objekt enthaltenden Bildes (P1) in Bezug auf das Hintergrund-Bild (P2) durch Koordinatenum-wandlung des ein Objekt enthaltenden Bildes (P1) entsprechend der berechneten projektiven Transformations-Matrix durchführt;

eine Differenz-Erzeugungseinheit (8c), die so eingerichtet ist, dass sie Differenz-Informationen erzeugt, die eine Differenz zwischen jedem entsprechenden Paar von Pixeln in dem ein Objekt enthaltenden Bild (P1) und in dem Hintergrund-Bild (P2) anzeigen, die die Positioniereinheit (8a) positioniert hat;

eine Objekt-Extrahiereinheit (8d), die so eingerichtet ist, dass sie auf Basis der durch die Differenz-Erzeugungseinheit erzeugten Differenz-Informationen einen Objekt-Bereich, der das Objekt-Bild enthält, aus dem ein Objekt enthaltenden Bild extrahiert; und

wobei die Positioniereinheit (8a) so eingerichtet ist, dass sie Durchführen des Positionierens des ein Objekt enthaltenden Bildes (P1) und des Hintergrund-Bildes (P2) weglässt, wenn die Merkmalslosigkeit über dem Schwellenwert liegt,

die Vorrichtung des Weiteren eine Distanz-Bestimmungseinheit (13), die so eingerichtet ist, dass sie eine Distanz zu dem Objekt von der ersten Bildaufnahmeeinheit (1, 2, 3) bestimmt, und eine Positions-Bestimmungseinheit (13, 14) umfasst, die so eingerichtet ist, dass sie eine Veränderung einer relativen Position zwischen einer ersten Position der Vorrichtung (100), an der das ein Objekt enthaltende Bild (P1) aufgenommen wird, und einer zweiten Position der Vorrichtung bestimmt, an der das Hintergrund-Bild (P2) aufgenommen wird,

wobei die Positioniereinheit (8a) so eingerichtet ist, dass sie das Positionieren des ein Objekt enthaltenden Bildes (P1) und des Hintergrund-Bildes (P2) in einem vereinfachten Modus durchführt, wenn die durch die Distanz-Bestimmungseinheit (13) bestimmte Distanz über einem zweiten Schwellenwert liegt, und

die Positioniereinheit (8a) so eingerichtet ist, dass sie Durchführen von Berechnung der projektiven Transformationsmatrix für das Positionieren des ein Objekt enthaltenden Bildes (P1) und des Hintergrund-Bildes (P2) weglässt, wenn die Positions-Bestimmungseinheit (13, 14) bestimmt, dass die relative Position unverändert ist.

2.  Vorrichtung nach Anspruch 1, wobei die Objekt-Extrahiereinheit (8d) so eingerichtet ist, dass sie beim Extrahieren des Objekt-Bereiches aus dem ein Objekt enthaltenden Bild durch Eliminieren von Pixel-Gruppen, die Bereiche haben, die kleiner sind als ein Schwellenwert, den Objekt-Bereich auf Basis der durch die Differenz-Erzeugungseinheit (8c) erzeugten Differenz-Informationen bestimmt, und

die Objekt-Extrahiereinheit (8d) so eingerichtet ist, dass sie beim Extrahieren des Objekt-Bereiches aus dem ein Objekt enthaltenden Bild entsprechend einer Menge von Merkmalen des Hintergrund-Bildes (P2) bestimmt, ob Eliminieren der Pixel-Gruppen, die Bereiche haben, die kleiner sind als der Schwellenwert, durchgeführt wird oder nicht.

3.  Vorrichtung nach Anspruch 1, wobei die Objekt-Extrahiereinheit (8d) so eingerichtet ist, dass sie beim Extrahieren des Objekt-Bereiches aus dem ein Objekt enthaltenden Bild durch Eliminieren von Pixel-Gruppen, die Bereiche haben, die kleiner sind als ein dritter Schwellenwert, den Objekt-Bereich auf Basis der durch die Differenz-Erzeugungseinheit (8c) erzeugten Differenz-Informationen bestimmt, und

die Objekt-Extrahiereinheit (8d) so eingerichtet ist, dass sie beim Extrahieren des Objekt-Bereiches aus dem ein Objekt enthaltenden Bild (P1) mittels Durchführen von Erosion und Dilation entsprechend einem Maß einer Verwacklung die Pixel-Gruppen eliminiert, die Bereiche haben, die kleiner sind als der dritte Schwellenwert.

4.  Vorrichtung nach Anspruch 1, die des Weiteren umfasst:

eine Einheit (8e) zum Erzeugen von Positionsinformationen, die so eingerichtet ist, dass sie Positionsinformationen erzeugt, die eine Position des Objekt-Bereiches in dem ein Objekt enthaltenden Bild (P1) angeben.

5.  Vorrichtung nach Anspruch 1, die des Weiteren umfasst:

eine Kombiniereinheit (8f), die so eingerichtet ist, dass sie auf Basis von Objekt-Bereich-Informationen des durch die Objekt-Extrahiereinheit (8d) extrahierten Objekt-Bereiches ein kombiniertes Bild (P4) aus einem alternativen Hintergrund-Bild und einem Bild des Objekt-Bereiches erzeugt.

6.  Vorrichtung nach den Ansprüchen 4 und 5,
wobei die Kombiniereinheit (8f) so eingerichtet ist, dass sie das kombinierte Bild (P4) auf Basis der durch die Einheit (8e) zum Erzeugen von Positionsinformationen erzeugten Positionsinformationen erzeugt.

7.  Vorrichtung nach Anspruch 6, wobei die Kombiniereinheit (8f) so eingerichtet ist, dass sie als das kombinierte Bild (P4) ein Objekt-Ausschnittbild erzeugt, das das Bild des Objekt-Bereiches auf einem einfarbigen Hintergrund (P3) enthält.

**8.** Vorrichtung nach Anspruch 7, wobei die Kombiniereinheit (8f) so eingerichtet ist, dass sie als das kombinierte Bild ein kombiniertes Objekt-Bild erzeugt, das mit dem Objekt-Ausschnittbild (P4) und einem bestimmten Hintergrund-Bild kombiniert wird.

**9.** Vorrichtung nach Anspruch 1, die des Weiteren umfasst:

eine Anzeigeeinheit (11), die so eingerichtet ist, dass sie das ein Objekt enthaltende Bild (P1) anzeigt, das in einem semitransparenten Modus ein Life-View-Bild des durch die zweite Bildaufnahmeeinheit (1, 2, 3) aufgenommenen Hintergrund-Bildes (P2) überlappt.

**10.** Bildaufnahmeverfahren, das umfasst:

Aufnehmen eines ein Objekt enthaltenden Bildes (P1), das ein Objekt-Bild enthält, das ein Bild eines Objektes ist, und ein Bild eines Hintergrundes enthält, unter einer ersten Auf-nahmebedingung;

Aufnehmen eines Hintergrund-Bildes (P2), das das Bild des Hintergrundes ohne Bild des Objektes enthält, unter einer zweiten Aufnahmebedingung, die im Wesentlichen die gleiche ist wie die erste Aufnahmebedingung, nach Aufnehmen des ein Objekt enthaltenden Bildes (P1);

Durchführen von Merkmalextraktions-Verarbeitung durch Auswählen einer bestimmten Anzahl von Merkmal-Blöcken auf Basis von YUV-Daten des Hintergrund-Bildes (P2) und Extrahieren von Inhalt dieser Blöcke als Schablonen (templates) und des Weiteren Ausschließen von Bereichen des Bildes, die für Tracking nicht geeignet sind, da sie flach sind oder stark ungeordnet sind;

Bestimmen einer Merkmalslosigkeit des Hintergrund-Bildes (P2) entsprechend einem Verhältnis einer Gesamtfläche von Blöcken in dem gesamten Hintergrund-Bild (P2), deren Mengen von Merkmalen größer sind als oder genauso groß wie ein Schwellenwert, zu der Fläche des gesamten Hintergrund-Bildes (P2);

Durchführen von Blockabgleich zum Positionieren zwischen dem Hintergrund-Bild (P2) und dem ein Objekt enthaltenden Bild (P1) durch Durchsuchen des ein Objekt enthaltenden Bildes (P1) auf eine Position, die eine beste Übereinstimmung ergibt, und durch Bestimmen eines am besten passenden Versatzes zwischen dem Hintergrund-Bild (P2) und dem ein Objekt enthaltenden Bild (P1) als einen Bewegungsvektor jeder Schablone;

Durchführen von Koordinatenumwandlung durch Berechnen einer projektiven Transformations-Matrix für das ein Objekt enthaltende Bild (P1) unter Verwendung einer Merkmalpunkt-Entsprechung bezüglich des Bewegungsvektors;

Durchführen von Positionieren des ein Objekt enthaltenden Bildes (P1) in Bezug auf das Hintergrund-Bild (P2) durch Koordinatenumwandlung des ein Objekt enthaltenden Bildes (P1) entsprechend der berechneten projektiven Transformations-Matrix;

Erzeugen von Differenz-Informationen, die eine Differenz zwischen jedem entsprechenden Paar von Pixeln in dem ein Objekt enthaltenden Bild (P1) und in dem Hintergrund-Bild (P2) anzeigen, die positioniert sind;

Extrahieren eines Objekt-Bereiches, der das Objekt-Bild enthält, aus dem ein Objekt enthaltenden Bild auf Basis der Differenz-Informationen; und

wobei Durchführen des Positionierens des ein Objekt enthaltenden Bildes (P1) und des Hintergrund-Bildes (P2) weggelassen wird, wenn die Merkmalslosigkeit über dem Schwellenwert liegt,

wobei das Verfahren des Weiteren umfasst:

Bestimmen einer Distanz zu dem Objekt von der Bildaufnahmeeinheit, die das ein Objekt enthaltende Bild (P1) aufnimmt, und

Bestimmen einer Veränderung einer relativen Position zwischen einer ersten Position der Vorrichtung (100), an der das ein Objekt enthaltende Bild (P1) aufgenommen wird, und einer zweiten Position der Vorrichtung, an der das Hintergrund-Bild (P2) aufgenommen wird,

wobei das Positionieren des ein Objekt enthaltenden Bildes (P1) und des Hintergrund-Bildes (P2) in einem vereinfachten Modus durchgeführt wird, wenn die bestimmte Distanz über einem zweiten Schwellenwert liegt, und

Durchführen von Berechnung der projektiven Transformations-Matrix für das Positionieren des ein Objekt enthaltenden Bildes (P1) und des Hintergrund-Bildes (P2) weggelassen wird, wenn die Positions-Bestimmungseinheit bestimmt, dass die relative Position unverändert ist.

**11.** Computerlesbares Medium, das ein Software-Programm speichert, das einen Computer veranlasst, das Bildaufnahmeverfahren nach Anspruch 10 durchzuführen.

**Revendications**

1. Appareil de capture d'images (100) comportant :

une unité de capture de première image (1, 2, 3) configurée pour capturer une image comprenant un sujet (P1) comprenant une image de sujet qui est une image de sujet et une image d'un arrière-plan selon une première condition de capture ;

une unité de capture de seconde image (1, 2, 3) configurée pour, après la capture de l'image comprenant le sujet (P1), capturer une image d'arrière-plan (P2) comprenant l'image de l'arrière-plan sans image du sujet selon une seconde condition de capture qui est sensiblement la même que la première condition de capture ;

une unité de calcul de quantité de caractéristiques (6) configurée pour sélectionner un nombre donné de blocs caractéristiques en fonction des données YUV de l'image d'arrière-plan (P2) et extraire les contenus de ces blocs en tant que modèles, et de plus exclure les régions de l'image qui ne sont pas appropriées pour un suivi parce qu'elles ont un caractère aléatoire plat ou élevé ;

une unité de détermination d'absence de caractéristiques (6) configurée pour déterminer une absence de caractéristiques de l'image d'arrière-plan (P2) selon un rapport de la zone totale de bloc dans toute l'image d'arrière-plan (P2) dont les quantités de caractéristiques sont supérieures à ou égales à un seuil par rapport à la zone de toute l'image d'arrière-plan (P2),

une unité de correspondance de blocs (7) pour effectuer un traitement de correspondance de blocs pour un positionnement entre l'image d'arrière-plan (P2) et l'image comprenant le sujet (P1) configurée pour rechercher l'image comprenant le sujet (P1) pour une position qui donne une meilleure correspondance et pour déterminer, en tant que vecteur de mouvement de chaque modèle, un décalage le plus approprié entre l'image d'arrière-plan (P2) et l'image comprenant le sujet (P1) ;

un module de calcul de formule de conversion de coordonnées (8b) configuré pour calculer une matrice de transformation projective pour l'image comprenant le sujet (P1) en utilisant une correspondance de points caractéristiques ayant trait au vecteur de mouvement ;

une unité de positionnement (8a) configurée pour effectuer un positionnement de l'image comprenant le sujet (P1) par rapport à l'image d'arrière-plan (P2) en convertissant les coordonnées de l'image comprenant le sujet (P1) selon la matrice de transformation projective calculée;

une unité de génération de différence (8c) configurée pour générer une information différentielle indiquant une différence entre chaque paire correspondante de pixels dans l'image comprenant le sujet (P1) et l'image d'arrière-plan (P2) telle que positionnée par l'unité de positionnement ;

une unité d'extraction de sujet (8d) configurée pour extraire une région de sujet comprenant l'image du sujet à partir de l'image comprenant le sujet en fonction de l'information différentielle générée par l'unité de génération de différence ; et

dans lequel l'unité de positionnement (8a) est configurée pour omettre l'exécution du positionnement de l'image comprenant le sujet (P1) et de l'image d'arrière-plan (P2) lorsque l'absence de caractéristiques est supérieure au seuil,

l'appareil comportant en outre une unité de détermination de distance (13) configurée pour déterminer une distance par rapport au sujet à partir de l'unité de capture de première image (1, 2, 3), et une unité de détermination de position (13, 14) configurée pour déterminer un changement dans une position relative entre une première position de l'appareil (100) à laquelle l'image comprenant le sujet (P1) est capturée et une seconde position de l'appareil à laquelle l'image d'arrière-plan (P2) est capturée,

dans lequel l'unité de positionnement (8a) est configurée pour effectuer le positionnement de l'image comprenant le sujet (P1) et l'image d'arrière-plan (P2) dans un mode simplifié lorsque la distance déterminée par l'unité de détermination de distance est supérieure à un second seuil, et

dans lequel l'unité de positionnement (8a) est configurée pour omettre l'exécution d'un calcul de la matrice de transformation projective pour le positionnement de l'image comprenant le sujet (P1) et de l'image d'arrière-plan (P2) lorsque l'unité de détermination de position détermine que la position relative est inchangée.

2. Appareil selon la revendication 1, dans lequel l'unité d'extraction de sujet (8d) est configurée pour déterminer la région de sujet lors de l'extraction de la région de sujet à partir de l'image comprenant le sujet en éliminant les ensembles de pixels possédant des régions inférieures à un seuil en fonction de l'information différentielle générée par l'unité de génération de différence (8c), et

dans lequel l'unité d'extraction de sujet est configurée pour déterminer s'il faut ou non effectuer l'élimination des ensembles de pixels possédant des régions inférieures au seuil conformément à une quantité caractéristique de l'image d'arrière-plan (P2) lors de l'extraction de la région de sujet à partir de l'image comprenant le sujet.

3. Appareil selon la revendication 1, dans lequel l'unité d'extraction de sujet (8d) est configurée pour déterminer la région de sujet lors de l'extraction de la région de sujet à partir de l'image comprenant le sujet (P1) en éliminant les ensembles de pixels possédant des régions inférieures à un troisième seuil en fonction de l'information différentielle générée par l'unité de génération de différence (8c), et
dans lequel l'unité d'extraction de sujet est configurée pour éliminer les ensembles pixels possédant des régions inférieures au troisième seuil en effectuant une érosion et une dilatation conformément à une quantité de bougé de l'appareil photo lors de l'extraction de la région de sujet et à partir de l'image comprenant le sujet (P1).

4. Appareil selon la revendication 1 comportant en outre :

   une unité de génération d'information de position (8e) configurée pour générer une information de position indiquant une position de la région de sujet dans l'image comprenant le sujet (P1).

5. Appareil selon la revendication 1 comportant en outre:

   une unité de combinaison (8f) configurée pour générer une image combinée (P4) d'une variante d'image d'arrière-plan et d'une image de la région de sujet en fonction de l'information de région de sujet et de la région de sujet extraite par l'unité d'extraction de sujet (8d).

6. Appareil selon les revendications 4 et 5,
dans lequel l'unité de combinaison (8f) est configurée pour générer l'image combinée (P4) en fonction de l'information de position générée par l'unité de génération d'information de position (8e).

7. Appareil selon la revendication 6, dans lequel l'unité de combinaison (8f) est configurée pour générer, en tant qu'image combinée (P4), une image découpée de sujet comprenant l'image de la région de sujet sur un arrière-plan uni (P3).

8. Appareil selon la revendication 7, dans lequel l'unité de combinaison (8f) est configurée pour générer, en tant qu'image combinée, une image combinée de sujet combinée à l'image découpée de sujet (P4) et à une image d'arrière-plan donnée.

9. Appareil selon la revendication 1 comportant en outre :

   une unité d'affichage (11) configurée pour afficher l'image comprenant le sujet (P1) chevauchant dans un mode semi-transparent une image en visualisation réelle de l'image d'arrière-plan (P2) capturée par l'unité de capture de seconde image (1, 2, 3).

10. Procédé de traitement d'images comportant :

   la capture d'une image comprenant un sujet (P1) comprenant une image de sujet qui est une image d'un sujet et une image d'un arrière-plan selon une première condition de capture ;
   la capture d'une image d'arrière-plan (P2) comprenant l'image de l'arrière-plan sans image du sujet selon une seconde condition de capture qui est sensiblement la même que la première condition de capture, après capture de l'image comprenant le sujet (P1) ;
   l'exécution d'un traitement d'extraction de caractéristiques en sélectionnant un nombre donné de blocs caractéristiques en fonction des données YUV de l'image d'arrière-plan (P2) et l'extraction des contenus de ces blocs en tant que modèles, et de plus l'exclusion des régions de l'image qui ne sont pas appropriées pour un suivi parce qu'elles ont un caractère aléatoire plat ou élevé ;
   la détermination d'une absence de caractéristiques de l'image d'arrière-plan (P2) selon un rapport d'une zone totale de blocs dans toute l'image d'arrière-plan (P2) dont les quantités caractéristiques sont supérieures à ou égales à un seuil par rapport à la zone de toute l'image d'arrière-plan (P2) ;
   l'exécution d'une correspondance de blocs pour un positionnement entre l'image d'arrière-plan (P2) et l'image comprenant le sujet (P1) en cherchant l'image comprenant le sujet (P1) pour une position qui donne une meilleure correspondance et en déterminant, en tant que vecteur de mouvement de chaque modèle, un décalage le plus approprié entre l'image d'arrière-plan (P2) et l'image comprenant le sujet (P1) ;
   l'exécution d'une conversion de coordonnées en calculant une matrice de transformation projective pour l'image comprenant le sujet (P1) en utilisant une correspondance de points caractéristiques ayant trait au vecteur de mouvement ;

l'exécution d'un positionnement de l'image comprenant le sujet (P1) par rapport à l'image d'arrière-plan (P2) en convertissant les coordonnées de l'image comprenant le sujet (P1) selon la matrice de transformation projective calculée ;

la génération d'une information différentielle indiquant une différence entre chaque paire correspondante de pixels dans l'image comprenant le sujet (P1) et dans l'image d'arrière-plan (P2) telles que positionnées ;

l'extraction d'une région de sujet comprenant l'image de sujet à partir de l'image comprenant le sujet en fonction de l'information différentielle ; et

dans lequel l'exécution du positionnement de l'image comprenant le sujet (P1) et de l'image d'arrière-plan est omise lorsque l'absence de caractéristique est supérieure au seuil,

le procédé comportant en outre : la détermination d'une distance par rapport au sujet à partir de l'unité de capture d'images capturant l'image comprenant le sujet (P1), et

la détermination d'un changement d'une position relative entre une première position de l'appareil (100) à laquelle l'image comprenant le sujet (P1) est capturée et une seconde position de l'appareil à laquelle l'image d'arrière-plan (P2) est capturée,

dans lequel le positionnement de l'image comprenant le sujet (P1) et de l'image d'arrière-plan (P2) est effectué dans un mode simplifié lorsque la distance déterminée est supérieure à un second seuil, et

l'exécution d'un calcul de la matrice de transformation projective pour le positionnement de l'image comprenant le sujet (P1) et de l'image arrière-plan (P2) est omise lorsque l'unité de détermination de position détermine que la position relative est inchangée.

**11.** Support pouvant être lu par un ordinateur comportant un programme logiciel qui amène un ordinateur à effectuer le procédé de traitement d'images selon la revendication 10.

FIG. 1

100

LENS UNIT — 1
IMAGE CAPTURING UNIT — 2
IMAGE DATA GENERATING UNIT — 4
FRAMEBUFFER — 5
DISPLAY CONTROL UNIT — 10
DISPLAY UNIT — 11

CAPTURING CONTROL UNIT — 3
AF MODULE — 3a
FEATURE AMOUNT CALCULATING UNIT — 6
BLOCK MATCHING UNIT — 7

IMAGE PROCESSING UNIT — 8
POSITIONING MODULE — 8a
COORDINATE CONVERSION FORMULA CALCULATING MODULE — 8b
DIFFERENCE GENERATING MODULE — 8c
SUBJECT REGION EXTRACTING MODULE — 8d
POSITION INFORMATION GENERATING MODULE — 8e
IMAGE COMBINING MODULE — 8f

CPU — 13
1A

SHUTTER BUTTON — 12a
MODE BUTTON — 12b
12

GYRO SENSOR — 14
RECORDING MEDIUM — 9

EP 2 199 978 B1

23

# FIG. 2

```
        ┌──────────────────────────┐
        │   SUBJECT CUTTING-OUT    │
        │        PROCESS           │
        └──────────────────────────┘
                     │
                     ▼                           S1
        ┌──────────────────────────────┐
        │ DISPLAY MESSAGE TO TAKE      │
        │ SUBJECT-INCLUDING IMAGE      │
        │ ON LIVE-VIEW IMAGE           │
        └──────────────────────────────┘
                     │                           S2
                     ▼
        ┌──────────────────────────────┐
        │ CALCULATE SUBJECT DISTANCE   │
        └──────────────────────────────┘
                     │                           S3
                     ▼
        ┌──────────────────────────────┐
        │ CAPTURE SUBJECT-INCLUDING    │
        │ IMAGE AND START ACQUISITION  │
        │ OF GYRO DATA                 │
        └──────────────────────────────┘
                     │                           S4
                     ▼
        ┌──────────────────────────────┐
        │ STORE YUV DATA OF            │
        │ SUBJECT-INCLUDING IMAGE      │
        └──────────────────────────────┘
                     │                           S5
                     ▼
        ┌──────────────────────────────┐
        │ FIX CAPTURING CONDITIONS TO  │
        │ THE ONE EMPLOYED WHEN        │
        │ CAPTURING SUBJECT-INCLUDING  │
        │ IMAGE                        │
        └──────────────────────────────┘
```

S6 — DISPLAY SUBJECT-INCLUDING IMAGE IN SEMI-TRANSPARENT MODE ON LIVE-VIEW IMAGE AND MESSAGE AS INSTRUCTION TO CAPTURE BACKGROUND IMAGE

S7 — AFTER CAMERA POSITION ADJUSTMENT BY USER, TAKE BACKGROUND IMAGE UNDER FIXED, GIVEN CAPTURING CONDITIONS

S8 — ACQUIRE DETERMINATION INFORMATION INDICATING WHETHER STATIONARY STATE IS CONTINUED FROM TAKING OF SUBJECT-INCLUDING IMAGE TO TAKING OF BACKGROUND IMAGE

S9 — STORE YUV DATA OF BACKGROUND IMAGE

S10 — SUBJECT DISTANCE IS SHORTER THAN ONE METER?

NO

YES

S12 — DESIGNATE CONGRUENT TRANSFORMATION MODEL AS IMAGE CONVERSION MODEL OF PROJECTIVE TRANSFORMATION

S11 — DESIGNATE SIMILARITY TRANSFORMATION MODEL AS IMAGE CONVERSION MODEL OF PROJECTIVE TRANSFORMATION

S13 — CALCULATE PROJECTIVE TRANSFORMATION MATRIX FOR YUV DATA OF SUBJECT-INCLUDING IMAGE ACCORDING TO DESIGNATED IMAGE CONVERSION MODEL USING BACKGROUND IMAGE AS REFERENCE

(A)

# FIG. 3

(A)

S14 — SUCCEEDED IN CALCULATING PROJECTIVE TRANSFORMATION MATRIX?

NO →

YES ↓

S16 — STATIONARY STATE IS CONTINUED?

NO →

YES

S17 — BACKGROUND IS FEATURELESS?

NO →

YES

S15 — PERFORM PROJECTIVE TRANSFORMATION ON SUBJECT–INCLUDING IMAGE

S19 — SUBJECT EXTRACTING PROCESS

S20 — GENERATE ALPHA MAP OF SUBJECT REGION

S21 — SUBJECT CUT-OUT IMAGE GENERATING PROCESS

S22 — DISPLAY SUBJECT CUT-OUT IMAGE

S23 — STORE ALPHA MAP AND SUBJECT CUT-OUT IMAGE IN THE FORM OF SINGLE FILE

S18 — DISPLAY MESSAGE TO THE EFFECT THAT CUTTING-OUT OF SUBJECT REGION IS FAILED

END

## FIG. 4A

$$\begin{bmatrix} a & -b & s \\ b & a & t \\ 0 & 0 & 1 \end{bmatrix}$$

## FIG. 4B

$$\begin{bmatrix} 1 & -b & s \\ b & 1 & t \\ 0 & 0 & 1 \end{bmatrix}$$

# FIG. 5

SUBJECT EXTRACTING PROCESS

ELIMINATE HIGH-FREQUENCY COMPONENTS FROM SUBJECT-INCLUDING IMAGE AND BACKGROUND IMAGE BY LOWPASS FILTER ～ S211

GENERATE DEGREE-OF-DIFFERENCE MAP FROM LOWPASS-FILTERED SUBJECT-INCLUDING IMAGE AND BACKGROUND IMAGE ～ S212

BINARIZE DEGREE-OF-DIFFERENCE MAP USING GIVEN THRESHOLD VALUE ～ S213

S214 BACKGROUND IMAGE HAS FEATURES THAT ARE GREATER THAN OR EQUAL TO GIVEN AMOUNT?

NO

YES S215

CALCULATE EROSION AMOUNT

PERFORM EROSION PROCESSING ON DEGREE-OF-DIFFERENCE MAP

S216

ELIMINATE REGIONS THAT ARE SMALLER THAN OR EQUAL TO GIVEN VALUE BY LABELING PROCESSING S217

DETERMINE LARGEST ISLAND PATTERN AS SUBJECT REGION S218

PERFORM DILATION PROCESSING ON SUBJECT REGION TO COMPENSATE FOR EROSION S219

REPLACE, WITH EFFECTIVE REGIONS, REGIONS THE RATIOS OF NUMBERS OF WHOSE CONSTITUENT PIXELS TO NUMBER OF CONSTITUENT PIXELS OF SUBJECT REGION ARE SMALLER THAN OR EQUAL TO GIVEN VALUE BY PERFORMING LABELING PROCESSING S220

GIVE COMBINING GRADATION TO PERIPHERAL PORTION OF SUBJECT REGION BY USING AVERAGING FILTER S221

END

# FIG. 6

SUBJECT CUT-OUT IMAGE
GENERATING PROCESS

READ SUBJECT-INCLUDING
IMAGE, SINGLE-COLOR
BACKGROUND IMAGE, AND
ALPHA MAP ~ S231

SPECIFY ONE PIXEL OF
SUBJECT-INCLUDING IMAGE ~ S232

BRANCH
OFF ACCORDING
TO ALPHA VALUE OF
SPECIFIED PIXEL
S233

$\alpha = 0$

$\alpha = 1$

$0 < \alpha < 1$

S234
FILL SPECIFIED PIXEL
WITH SINGLE COLOR

S235
BLEND PIXEL VALUE OF
SPECIFIED PIXEL WITH
GIVEN SINGLE COLOR.

S237
MOVE TO NEXT PIXEL

ALL PIXELS
PROCESSED?
S236

NO

YES

END

EP 2 199 978 B1

FIG. 7A

P1

12a

11

100

S

TAKE SUBJECT IMAGE
TO BE CUT OUT

12b

FIG. 7B

P1

S

FIG. 7C

P2

12a

11

100

TAKE BACKGROUND IMAGE WITHOUT A
SUBJECT BY POSITIONING THE CAMERA
USING THE SEMI-TRANSPARENT IMAGE

12b

P2

FIG. 8A

S

M

FIG. 8B

P3   P4   12a

FIG. 8C

11

100

S

12b

# FIG. 9

```
  ┌─────────────────────────────┐
  │  SUBJECT COMBINED IMAGE     │
  │  GENERATING PROCESS         │
  └─────────────────────────────┘
                │
                ▼
  ┌─────────────────────────────┐
  │  SPECIFY BACKGROUND-USE     │ ～S31
  │  IMAGE                      │
  └─────────────────────────────┘
                │
                ▼
  ┌─────────────────────────────┐
  │  READ OUT BACKGROUND-USE    │ ～S32
  │  IMAGE                      │
  └─────────────────────────────┘
                │
                ▼
  ┌─────────────────────────────┐
  │  SPECIFY SUBJECT CUT-OUT    │ ～S33
  │  IMAGE                      │
  └─────────────────────────────┘
                │
                ▼
  ┌─────────────────────────────┐
  │  READ OUT SUBJECT CUT-OUT   │ ～S34
  │  IMAGE                      │
  └─────────────────────────────┘
                │
                ▼
  ┌─────────────────────────────┐
  │ │ IMAGE COMBINING PROCESS │ │ ～S35
  └─────────────────────────────┘
                │
                ▼
  ┌─────────────────────────────┐
  │  DISPLAY SUBJECT COMBINED   │ ～S36
  │  IMAGE                      │
  └─────────────────────────────┘
                │
                ▼
         ┌──────────────┐
         │     END      │
         └──────────────┘
```

# FIG. 10

IMAGE COMBINING PROCESS

READ OUT ALPHA MAP — S351

SPECIFY ONE PIXEL OF BACKGROUND-USE IMAGE — S352

S353
BRANCH OFF ACCORDING TO ALPHA VALUE OF SPECIFIED PIXEL

$\alpha = 1$

$\alpha = 0$

$0 < \alpha < 1$

S354
OVERWRITE PIXEL VALUE OF SPECIFIED PIXEL WITH PIXEL VALUE OF CORRESPONDING PIXEL OF SUBJECT CUT-OUT IMAGE

S355
(BACKGROUND-USE IMAGE) x $(1 - \alpha)$ + {(SUBJECT CUT-OUT IMAGE) − (SINGLE COLOR) x $(1 - \alpha)$}

S357
MOVE TO NEXT PIXEL

S356
ALL PIXELS PROCESSED?

NO

YES

END

EP 2 199 978 B1

# FIG. 11

```
        ( SUBJECT CUTTING-OUT )
        (       PROCESS       )
                  |
                  | S1
                  v
  +----------------------------+
  | DISPLAY MESSAGE FOR TAKING |
  | SUBJECT-INCLUDING IMAGE    |
  | BEING OVERLAPPED ON        |
  | LIVE-VIEW IMAGE            |
  +----------------------------+
                  |
                  | S2
                  v
  +----------------------------+
  | CALCULATE SUBJECT DISTANCE |
  +----------------------------+
                  |
                  | S3
                  v
  +----------------------------+
  | TAKE SUBJECT-INCLUDING IMAGE|
  | UNDER GIVEN CAPTURING      |
  | CONDITIONS AND START       |
  | ACQUISITION OF GYRO DATA   |
  +----------------------------+
                  |
                  | S4
                  v
  +----------------------------+
  | STORE YUV DATA OF          |
  | SUBJECT-INCLUDING IMAGE    |
  +----------------------------+
                  |
                  | S5
                  v
  +----------------------------+
  | FIX CAPTURING CONDITIONS TO |
  | THE ONE EMPLOYED WHEN      |
  | CAPTURING SUBJECT-INCLUDING |
  | IMAGE                      |
  +----------------------------+
```

DISPLAY SUBJECT-INCLUDING IMAGE IN SEMI-TRANSPARENT MODE AND MESSAGE FOR TAKING BACKGROUND IMAGE BEING OVERLAPPED ON LIVE-VIEW IMAGE  ~S6

AFTER CAMERA POSITION ADJUSTMENT BY USER, TAKE BACKGROUND IMAGE UNDER FIXED, GIVEN CAPTURING CONDITIONS  ~S7

ACQUIRE DETERMINATION INFORMATION INDICATING WHETHER STATIONARY STATE HAS CONTINUED FROM TAKING OF SUBJECT-INCLUDING IMAGE TO TAKING OF BACKGROUND IMAGE  ~S8

STORE YUV DATA OF BACKGROUND IMAGE  ~S9

S101 — BACKGROUND IS FEATURELESS?

NO

S102 — STATIONARY STATE IS CONTINUED?

NO → ( C )

YES

YES

( B )

# FIG. 12

C

S103

SUBJECT
DISTANCE IS SHORTER
THAN ONE METER?

NO

YES

S104

S105

DESIGNATE CONGRUENT
TRANSFORMATION MODEL AS
IMAGE CONVERSION MODEL
OF PROJECTIVE
TRANSFORMATION

DESIGNATE SIMILARITY
TRANSFORMATION MODEL AS
IMAGE CONVERSION MODEL
OF PROJECTIVE
TRANSFORMATION

S106

B

CALCULATE PROJECTIVE
TRANSFORMATION MATRIX
FOR YUV DATA OF
SUBJECT-INCLUDING IMAGE
ACCORDING TO DESIGNATED
IMAGE CONVERSION MODEL
USING BACKGROUND IMAGE
AS REFERENCE

SUBJECT EXTRACTING
PROCESS          S19

GENERATE ALPHA MAP
OF SUBJECT REGION          S20

S107

SUCCEEDED IN
CALCULATING PROJECTIVE
TRANSFORMATION
MATRIX?

NO

YES

S108

SUBJECT CUT-OUT
IMAGE GENERATING
PROCESS          S21

PERFORM PROJECTIVE
TRANSFORMATION ON
SUBJECT-INCLUDING IMAGE

DISPLAY SUBJECT
CUT-OUT IMAGE          S22

STORE ALPHA MAP AND
SUBJECT CUT-OUT IMAGE
IN THE FORM OF SINGLE
FILE          S23

DISPLAY MESSAGE THAT
CUTTING-OUT OF SUBJECT
REGION IS FAILED

S109

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008319633 A
- JP 2009001484 A
- JP 2009278378 A
- JP 10021408 A
- US 7024054 B2